# EUROPEAN PATENT APPLICATION

(11) **EP 4 755 707 A1**
(43) Date of publication of application: **10.06.2026**
(21) Application number: 24849277.9
(22) Date of filing: 01.08.2024
(51) Int. Cl.: B60N 2/14

(54) **VEHICLE SEAT**

(30) Priority: 02.08.2023 US 202363517154 P
(71) Applicant: TS Tech Co., Ltd., Asaka-shi, Saitama 351-0012 (JP)
(72) Inventor: KATORI, Takayoshi, Shioya-gun, Tochigi 329-1217 (JP)
(74) Representative: Plougmann Vingtoft a/s
(86) International application number: PCT/JP2024/027628
(87) International publication number: WO 2025/028632

(57) **Abstract**

[Task] To configure a vehicle seat with a swivel mechanism so as to prevent tilt of a rotating component thereof.

[Solution] A vehicle seat 1 comprises: a seat body 3 having a seat cushion 7; and a swivel mechanism 2 disposed between a floor 5 and the seat cushion, rotatably supporting the seat cushion so that the seat cushion is rotatable about a rotation axis A extending in a vertical direction, wherein the swivel mechanism comprises a base component 41, and a rotating component 42 rotatably supported by the base component and rotatable about the rotation axis, wherein the swivel mechanism comprises a plurality of spacer components 171 and a plurality of biasing components 172 disposed between an outer periphery of the base component and an outer periphery of the rotating component, such that the spacer components 171 inhibit the rotating component from coming close to the base component, and that the biasing components 172 urge the rotating component toward the base component, and wherein the plurality of spacer components and the plurality of biasing components are arranged on an imaginary circle C centered on the rotation axis.

## Description

### TECHNICAL FIELD

The present invention relates to a vehicle seat.

### BACKGROUND ART

Patent Document 1 discloses a vehicle seat capable of rotating about a vertical rotation axis relative to a floor. The vehicle seat includes a swivel mechanism provided between the floor and a seat cushion. The swivel mechanism includes a base component provided on the floor side and a rotating component rotatably supported by the base component and coupled to the seat cushion. A ring-shaped thrust bearing centered on the rotation axis is positioned between the base component and the rotating component. The vehicle seat is also provided with a separation suppressing member on the radially outer side of the thrust bearing to prevent the separation of the rotating component from the base component.

### PRIOR ART DOCUMENT(S)

### PATENT DOCUMENT(S)

Patent Document 1: US2020/0317091A1

### SUMMARY OF THE INVENTION

### TASK TO BE ACCOMPLISHED BY THE INVENTION

However, the separation prevention member cannot resist forces applied in the direction in which the base component and rotating component come close to each other. This causes a problem that, when a downward force is applied to the outer periphery of the rotating component, the outer periphery of the rotating component deforms and displaces downward, causing a seat cushion to tilt. Furthermore, the deformation of the rotating component hinders a smooth rotation thereof.

The present invention has been made in view of the problem of the prior art, and a primary task to be accomplished by the present invention is to provide a vehicle seat assembly with a swivel mechanism, configured to prevent tilt of a rotating component thereof.

### MEANS TO ACCOMPLISH THE TASK

As a solution to the above-described task to be accomplished, an aspect of the present invention provides a vehicle seat (1) comprising: a seat body (3) having a seat cushion (7); and a swivel mechanism (2) disposed between a floor (5) and the seat cushion, rotatably supporting the seat cushion so that the seat cushion is rotatable about a rotation axis (A) extending in a vertical direction, wherein the swivel mechanism comprises a base component (41), and a rotating component (42) rotatably supported by the base component and rotatable about the rotation axis, wherein the swivel mechanism comprises a plurality of spacer components (171) and a plurality of biasing components (172) disposed between an outer periphery of the base component and an outer periphery of the rotating component, such that the spacer components (171) inhibit the rotating component from coming close to the base component, and that the biasing components (172) urge the rotating component toward the base component, and wherein the plurality of spacer components and the plurality of biasing components are arranged on an imaginary circle (C) centered on the rotation axis.

In this configuration, the plurality of spacer components (171) and the plurality of biasing components (172) are disposed between the outer periphery of the base component and an outer periphery of the rotating component, which retains a distance between the base component and the rotating component. This configuration suppresses the tilt of the rotating component in the vehicle seat with the swivel mechanism. Moreover, in this configuration, the plurality of spacer components and the plurality of biasing components are arranged on an imaginary circle (C) centered on the rotation axis, which enables well-balanced support of the rotating component relative to the base component, and also enables compact arrangement of the spacer components and the biasing components.

The above-described vehicle seat may be configured such that the base component includes a plurality of support brackets (176), and each of the plurality of support brackets includes the one or more spacer components and the one or more biasing components.

This configuration enables the one or more spacer components and the one or more biasing components to be assembled into a single unit, facilitating assembly work.

The above-described vehicle seat may be configured such that the swivel mechanism includes one or more separation suppressing components (170) provided between the outer periphery of the base component and the outer periphery of the rotating component, and each separation suppressing component includes a lower hook (182) that protrudes upward from an edge of the support bracket, and an upper hook (186) that protrudes downward from the rotating component and bends to face the lower hook from below through a gap.

In this configuration, even when a vehicle collision or similar event occurs and significant forces (loads) are applied to the seat body, the separation suppressing component suppresses the tilt of the rotating component relative to the base component.

The above-described vehicle seat may be configured such that the lower hook is positioned outside the imaginary circle, and either the spacer components or the biasing components are positioned on a radial line extending from the rotation axis to the lower hook.

This configuration enables compact arrangement of the spacer components, the biasing components, and the separation suppressing component.

The above-described vehicle seat may be configured such that each of the support brackets is provided with one of the biasing components positioned between two of the spacer components.

In this configuration, the rotating component is urged downward by the biasing component to contact two rollers, which suppresses the tilt of the rotating component.

The above-described vehicle seat may be configured such that the base component is supported on the floor via left and right slide mechanisms (4), wherein the base component comprises one or more lower brackets (46) coupled to the left and right slide mechanisms, and a base plate (47) supported by the lower brackets, wherein the rotating component comprises a rotating plate (56) rotatably supported by the base plate, and an upper bracket (57) coupled to the rotating plate, wherein the upper bracket is coupled to an upper surface of the rotating plate and also coupled to the seat body, wherein the plurality of spacer components and the plurality of biasing components are arranged between the lower bracket and the upper bracket, and wherein the rotating plate is provided at a vertical position between an upper end and a lower end of each support bracket.

This configuration enables the slide mechanisms and the swivel mechanisms to be made compact.

The above-described vehicle seat may be configured such that each of the support brackets overlaps with one of the left and right slide mechanisms as viewed from above, and part of the rotating plate is positioned below upper ends of the left and right slide mechanisms.

This configuration enables the slide mechanisms and the swivel mechanisms to be made compact.

The above-described vehicle seat may be configured such that each of the biasing component comprises: a locking piece (172A) projecting downward from the rotating component; a support pillar (172B) projecting upward from the base component; a contact piece (172C) supported on the support pillar so that the contact piece can vertically move and contact the locking piece from above; and a biasing member (172D) provided between the support pillar and the contact piece to urge the contact piece downward,

This configuration can urge the rotating component, which is rotatable relative to a fixed part, toward the fixed part side.

The above-described vehicle seat may be configured such that each spacer component includes a roller (171B) rotatably supported by the corresponding support bracket, and can contact the rotating component at the roller.

This configuration can reduce frictional resistance between each of the spacer components and the rotating component as the rotating component rotates.

The above-described vehicle seat may be configured such that part of each of the spacer components is positioned at a vertical position between an upper end of the lower hook and a lower end of the upper hook.

This configuration enables well-balanced arrangement of the spacer components and the corresponding separation suppressing components.

The above-described vehicle seat may be configured such that the seat body comprises a seatback (8) provided at a rear of the seat cushion via a reclining device (35), and a headrest (9) provided at a top of the seatback, and wherein the reclining device enables a user to freely adjust an inclination angle of the seatback relative to the seat cushion.

In this configuration, the seat body, which includes the seat cushion, seatback, headrest, and reclining mechanism, is rotatably supported by the swivel mechanism.

Another aspect of the present invention provides a vehicle seat (1) comprising: a seat body (3) having a seat cushion (7); and a swivel mechanism (2) disposed between a floor (5) and the seat cushion, rotatably supporting the seat cushion so that the seat cushion is rotatable about a rotation axis (A) extending in a vertical direction, wherein the swivel mechanism comprises a base component (41), a rotating component (42) rotatably supported by the base component and rotatable about the rotation axis, and a bearing (63) provided between the base component and the rotating component, wherein the swivel mechanism comprises a plurality of spacer components (171) and a plurality of biasing components (172) disposed between an outer periphery of the base component and an outer periphery of the rotating component, such that the spacer components (171) inhibit the rotating component from coming close to the base component, and that the biasing components (172) urge the rotating component toward the base component, and wherein the bearing is a thrust bearing extending annularly and centered on the rotation axis, and the plurality of spacer components are arranged radially outward of the bearing with respect to the rotation axis.

In this configuration, the spacer components are arranged radially outward of the bearing, which retains a distance between the outer periphery of the base component and the outer periphery of the rotating component, thereby suppressing the tilt of the rotating component in the vehicle seat with the swivel mechanism. Moreover, in this configuration, the plurality of spacer components reduce forces (loads) that can be applied to the bearing, which prevents formation of an imprint of the bearing on the rotating component and base component.

The above-described vehicle seat may be configured such that the swivel mechanism includes one or more separation suppressing components (170) provided between the outer periphery of the base component and the outer periphery of the rotating component, and each separation suppressing component includes a lower hook (182) that protrudes upward from the base component, and an upper hook (186) that protrudes downward from the rotating component and bends to face the lower hook from below through a gap, and wherein each separation suppressing component is positioned radially outward of the corresponding spacer components with respect to the rotation axis.

In this configuration, even when a vehicle collision or similar event occurs and significant forces (loads) are applied to the seat body, the tilt of the rotating component relative to the base component is suppressed.

The above-described vehicle seat may be configured such that at least one of the plurality of spacer components and the corresponding lower hook are positioned on a radial line extending from the rotation axis.

This configuration enables compact arrangement of the spacer component and the corresponding lower hook.

The above-described vehicle seat may be configured such that a lower cover is attached to a peripheral edge of the base component, and the plurality of spacer components are positioned inward of the lower cover, i.e., on the side of the rotation axis.

In this configuration, the spacer components can be hidden by the lower cover.

Yet another aspect of the present invention provides a vehicle seat (1) comprising: a seat body (3) having a seat cushion (7); and a swivel mechanism (2) disposed between a floor (5) and the seat cushion, rotatably supporting the seat cushion so that the seat cushion is rotatable about a rotation axis (A) extending in a vertical direction, wherein the swivel mechanism comprises a base component (41), and a rotating component (42) rotatably supported by the base component and rotatable about the rotation axis, wherein the swivel mechanism comprises a plurality of spacer components (171) and a plurality of biasing components (172) disposed between an outer periphery of the base component and an outer periphery of the rotating component, such that the spacer components (171) inhibit the rotating component from coming close to the base component, and that the biasing components (172) urge the rotating component toward the base component, wherein the plurality of spacer components are provided on the base component, each comprising a support shaft (171A) extending radially outward from the rotation axis, and a roller (171B) rotatably supported on the support shaft, wherein each roller has an outer peripheral surface formed as a tapered surface whose diameter increases radially outward from the rotation axis, wherein the rotating component has an inclined surface (188) which is inclined upward radially outward from the rotation axis, and wherein the plurality of rollers are in contact with the inclined surface.

In this configuration, the plurality of rollers can support both vertical forces (loads) applied from the rotating component and radial forces (loads) applied in radial directions extending from the rotation axis, which enables the plurality of rollers to reduce horizontal positional deviation of the rotating component relative to a fixed part.

The above-described vehicle seat may be configured such that each of the plurality of support shafts is provided with a biasing member (172D) that urges the corresponding roller radially inward toward the rotation axis.

This configuration can bring the plurality of rollers into contact with the inclined surface.

The above-described vehicle seat may be configured such that a plurality of support brackets are provided on the base component, and support the corresponding support shafts.

In this configuration, the one or more rollers, the one or more support shafts, and a corresponding support bracket can be assembled into a single unit, facilitating assembly work in which the rollers are installed onto the base component.

The above-described vehicle seat may be configured such that each of the plurality of support brackets includes an inner wall (171C) and an outer wall (171D) which, respectively, support an inner end and an outer end of the corresponding support shaft(s), the inner and outer ends being positioned radially inward toward and outward from the rotation axis, respectively.

This configuration enables stable support of each support shaft.

The above-described vehicle seat may be configured such that each of the plurality of biasing members is a coil spring and provided around the outer end side of a corresponding support shaft.

This configuration enables a structure where the biasing member is mounted to the corresponding support shaft to be made simple.

The above-described vehicle seat may be configured such that each of the plurality of rollers has a recess (171F) at its radially outer end and recessed inward toward the rotation axis, wherein an end portion of each biasing member is received within the corresponding recess.

This configuration prevents horizontal positional deviation of the biasing member relative to the roller.

The above-described vehicle seat may be configured such that an upper end of the inner wall of the support bracket is positioned below the upper edge of the radially inner end of the corresponding roller(s), and an upper end of the outer wall of the support bracket is positioned below the upper edge of the radially outer end of the corresponding roller(s).

This configuration prevents the inner wall and the outer wall from contacting the rotating component.

The above-described vehicle seat may be configured such that a bearing (63) having a ring shape centered on the rotation axis is provided between the base component and the rotating component, and the plurality of rollers are provided radially outward of the bearing.

In this configuration, the plurality of rollers are provided radially outward of the bearing, which retains a distance between the outer periphery of the base component and the outer periphery of the rotating component. This suppresses the tilt of the rotating component in the vehicle seat.

The above-described vehicle seat may be configured such that the swivel mechanism includes one or more separation suppressing components (170) provided between the outer periphery of the base component and the outer periphery of the rotating component, and each separation suppressing component includes a lower hook (182) that protrudes upward from the base component, and an upper hook (186) that protrudes downward from the rotating component and bends to face the lower hook from below through a gap, and wherein each separation suppressing component is positioned radially outward of the corresponding roller(s) with respect to the rotation axis.

In this configuration, even when a vehicle collision or similar event occurs and significant forces (loads) are applied to the seat body, the tilt of the rotating component relative to the base component is suppressed.

The above-described vehicle seat may be configured such that each biasing component is positioned radially inward of the corresponding separation suppressing component with respect to the rotation axis.

This configuration enables compact arrangement of the biasing components.

Patent Publication JP2020-196306A discloses a vehicle seat capable of rotating about a vertical rotation axis relative to a floor. The vehicle seat includes one or more slide mechanisms provided on the floor and a swivel mechanism provided between the floor and a seat cushion. The swivel mechanism includes a base component supported by the slide mechanisms and a rotating component rotatably supported by the base component and coupled to the seat cushion. The base component has a lower cover attached thereto, and the rotating component has an upper cover attached thereto. The lower and upper covers cover the swivel mechanism, thereby preventing foreign matters from entering the swivel mechanism, and also improving the appearance of the vehicle seat. In addition, the upper cover conceals a gap between the swivel mechanism and the seat cushion is hidden by the upper cover.

In some cases, a lifting mechanism for changing the height of the seat cushion is provided between the rotating component and the seat cushion. In this case, when the seat cushion is raised by the lifting mechanism, a gap can be formed between the seat cushion and the lower cover, which causes a risk of entry of foreign matters.

The present invention has been made in view of the above-described problem of the prior art, and a primary task to be accomplished by the present invention is to provide a vehicle seat with a swivel mechanism and a lifting mechanism, configured to prevent foreign matters from entering the vehicle seat.

As a solution to the above-described task to be accomplished, an aspect of the present invention provides a vehicle seat (1) comprising: a seat body (3) having a seat cushion (7); a swivel mechanism (2) disposed between a floor (5) and the seat cushion, rotatably supporting the seat cushion so that the seat cushion is rotatable about a rotation axis (A) extending in a vertical direction; a lifting mechanism (110) provided between the swivel mechanism and the seat cushion, the lifting mechanism supporting the seat cushion so that the seat cushion can move vertically between a high position and a low position with respect to the swivel mechanism; a swivel mechanism cover (200) provided on the swivel mechanism; and side covers (21) provided on left and right sides of the seat cushion, wherein when the seat cushion is at the high position and at the low position, the swivel mechanism cover overlaps the side covers as viewed along a left-right direction.

In this configuration, even when the seat cushion is raised by the lifting mechanism, the swivel mechanism cover overlaps the side covers as viewed along the left-right direction, resulting in that no gap is formed between the seat cushion and the swivel mechanism cover. This configuration prevents foreign matters from entering the vehicle seat with the swivel mechanism and lifting mechanism.

The above-described vehicle seat may be configured such that the swivel mechanism comprises a base component (41) and a rotating component (42) rotatably supported by the base component, and wherein the swivel mechanism cover includes an upper cover (201) provided on the rotating component, and when the seat cushion is at the high position and when at the lower position, the upper cover overlaps the side covers as viewed along the left-right direction.

In this configuration, even when the seat cushion is raised by the lifting mechanism, the upper cover overlaps the side covers as viewed along the left-right direction, resulting in that no gap is formed between the seat cushion and the upper cover.

The above-described vehicle seat may be configured such that, when the seat cushion is at the high position and when at the lower position, an upper end of each upper cover is positioned above the lower end of the corresponding side cover.

In this configuration, even when the seat cushion is raised by the lifting mechanism, no gap is formed between the seat cushion and the upper cover.

The above-described vehicle seat may be configured such that the upper cover includes an upper cover upper walls (223A) extending in the lateral direction, and an upper cover extension walls (223C) extending upward from the upper cover upper wall(s), and the side covers overlap the upper cover upper walls as viewed from above, wherein, when the seat cushion is at the high position and when at the lower position, an upper end of each upper cover extension wall is positioned above the lower end of the corresponding side cover.

In this configuration, even when the seat cushion is raised by the lifting mechanism, no gap is formed between the seat cushion and the upper cover.

The above-described vehicle seat may be configured such that the lower ends of the side covers overlap the upper cover as viewed along the vertical direction, wherein, when the seat cushion is at the high position and when at the lower position, the lower end of each side cover is positioned below the upper end of the corresponding upper cover.

In this configuration, even when the seat cushion is raised by the lifting mechanism, no gap is formed between the seat cushion and the upper cover.

The above-described vehicle seat may be configured such that the lower ends of the side covers overlap the upper cover upper walls as viewed along the vertical direction, wherein, when the seat cushion is at the high position and when at the lower position, the lower ends of the side covers are positioned below the upper ends of the upper cover upper walls.

In this configuration, even when the seat cushion is raised by the lifting mechanism, no gap is formed between the seat cushion and the upper cover.

The above-described vehicle seat may be configured such that the upper cover is attached to upper cover attachments (225) of the rotating component, and the upper cover attachments are positioned inward of the side covers with regard to the rotation axis of the swivel mechanism.

In this configuration, the upper cover attachments are hidden by the side covers.

The above-described vehicle seat may be configured such that a front cover (240) is provided between a front portion of the seat cushion and the upper cover, and the upper cover attachments are positioned rearward of the front cover.

In this configuration, the upper cover attachments are hidden by the front cover.

The above-described vehicle seat may be configured such that the upper cover extension walls are attached to the corresponding upper cover attachments.

This configuration enables the stable positioning of the upper cover extension walls.

The above-described vehicle seat may be configured such that the swivel mechanism includes one or more separation suppressing components (170) provided between the outer periphery of the base component and the outer periphery of the rotating component, and each separation suppressing component includes a lower hook (182) that protrudes upward from the base component, and an upper hook (186) that protrudes downward from the rotating component and bends to face the lower hook from below through a gap, and wherein the upper cover attachments are positioned radially outward of the separation suppressing components with respect to the rotation axis.

In this configuration, the upper cover can be fixed to the outer periphery of the rotating component.

The above-described vehicle seat may be configured such that the base component is supported on the floor via left and right slide mechanisms (4), wherein the base component comprises one or more lower brackets (46) coupled to the left and right slide mechanisms, and a base plate (47) supported by the lower brackets, wherein the rotating component comprises a rotating plate (56) rotatably supported by the base plate, and an upper bracket (57) coupled to the rotating plate, wherein the lifting mechanism is coupled to the upper bracket, wherein each of the slide mechanisms comprises a lower rail (36) coupled to the floor and an upper rail (37) slidably supported on the lower rail, wherein the swivel mechanism cover includes a lower cover (201) provided on the base component, wherein the lower cover covers at least parts of the lower brackets and at least parts of the upper rails, and wherein a lower end position of the upper cover is positioned below an upper end position of the lower cover.

In this configuration, a gap between the upper cover and lower cover can be eliminated.

The above-described vehicle seat may be configured such that a lower end of the upper cover is formed in a circular shape centered on the rotation axis, wherein an upper end of the lower cover is formed in a circular shape centered on the rotation axis, and positioned radially inward of the lower end of the upper cover.

This configuration enables the outer peripheries of the upper cover and lower cover to be circular-shaped, which ensures that the outer shapes of the upper cover and lower cover remain circular even when the swivel mechanism rotates.

The above-described vehicle seat may be configured such that the seat body comprises a seatback (8) provided at a rear of the seat cushion via a reclining device (35), and a headrest (9) provided at a top of the seatback, wherein the reclining device enables a user to freely adjust an inclination angle of the seatback relative to the seat cushion.

In this configuration, the seat body, which includes the seat cushion, seatback, headrest, and reclining mechanism, is rotatably supported by the swivel mechanism.

Another aspect of the present invention provides a vehicle seat (1) comprising: a seat body (3) having a seat cushion (7); a swivel mechanism (2) disposed between a floor (5) and the seat cushion, rotatably supporting the seat cushion so that the seat cushion is rotatable about a rotation axis (A) extending in a vertical direction; and a swivel mechanism cover (200) provided on the swivel mechanism, wherein the swivel mechanism comprises a base component (41), and a rotating component (42) rotatably supported by the base component, wherein the swivel mechanism cover includes an upper cover (201) provided on the base component, and wherein an upper end of the lower cover and a lower end of the upper cover overlap each other as viewed radially from the rotation axis.

In this configuration, a gap between the upper cover and lower cover can be eliminated.

The above-described vehicle seat may be configured such that the lower cover includes lower cover arc parts (204A, 205A, 206A), each of which extends in an arc shape centered on the rotation axis and partially extends upward, wherein the upper cover includes upper cover arc parts (221B, 222B, 223B), each of which extends in an arc shape centered on the rotation axis and extends partially downward, and wherein the lower cover arc parts and the upper cover arc parts each outline a circular shape with the same outer diameter.

This configuration enables the outer peripheries of the upper cover and lower cover to be circular-shaped, which ensures that the outer shapes of the upper cover and lower cover remain circular even when the swivel mechanism rotates.

The above-described vehicle seat may be configured such that one of the lower cover and the upper cover has a partition wall (230) positioned radially inward thereof, and wherein the partition wall overlaps the lower cover arc parts and the upper cover arc parts, as viewed along the horizontal direction.

In this configuration, the partial wall can eliminate a gap between the upper cover and lower cover.

The above-described vehicle seat may be configured such that the partition wall is formed in a cylindrical shape centered on the rotation axis, and the outer diameter of the partition wall is smaller than the outer diameter of the circle of the shapes of arc which the lower cover arc parts have.

In this configuration, the partition wall is hidden inside by the upper cover and the lower cover.

The above-described vehicle seat may be configured such that the partition wall is positioned to extend along the inner surfaces of the lower cover arc parts.

This configuration prevents positional deviation of the partition wall.

The above-described vehicle seat may be configured such that the swivel mechanism includes one or more separation suppressing components (170) provided between the outer periphery of the base component and the outer periphery of the rotating component, and each separation suppressing component includes a lower hook (182) that protrudes upward from the base component, and an upper hook (186) that protrudes downward from the rotating component and bends to face the lower hook from below through a gap, and wherein the separation suppressing components are arranged radially inward of the partition wall.

In this configuration, the separation suppressing components can be hidden inside by the upper cover and the lower cover.

The above-described vehicle seat may be configured such that a ring-shaped flange (231) extending radially inward is provided at the lower end of the partition wall, and protrusions (234) capable of engaging with the upper hooks are provided on the upper surface of the flange.

This configuration suppresses vertical displacement of the rotating component relative to the base component.

The above-described vehicle seat may be configured such that a bearing (63) having a ring shape centered on the rotation axis is provided between the base component and the rotating component, and the flange is positioned radially outward of the bearing.

In this configuration, the protrusion of the flange and the upper hooks are in contact with each other at positions radially outward of the bearing. This configuration can suppress vertical displacement of the rotating component relative to the base component at positions radially outward of the bearing.

The above-described vehicle seat may be configured such that the base component is supported on the floor via left and right slide mechanisms (4), wherein the base component comprises one or more lower brackets (46) coupled to the left and right slide mechanisms, and a base plate (47) supported by the lower brackets, wherein the lower cover comprises a lower cover front part (204) positioned frontward of the base plate, a lower cover rear part (205) positioned rearward of the base plate, and left and right lower cover side parts (206) positioned on the left and right sides of the base plate, and wherein the lower cover front part and the lower cover rear part are each coupled to the left and right lower cover side parts.

This configuration enables the lower cover to be positioned around the base plate subsequent to the formation of the swivel mechanism.

The above-described vehicle seat may be configured such that the lower bracket 46 is provided with a front lower cover attachment (211) which extends in the left-right direction in front of the lower bracket and is coupled thereto at its left and right ends, and wherein the lower cover front part is attached to the front lower cover attachment.

In this configuration, the lower cover front part can be positioned in front of the lower bracket.

The above-described vehicle seat may be configured such that the front lower cover attachment comprises front and rear support members (212A, 213A) spaced apart from each other in the front-rear direction and extending parallel to each other in the left-right direction, wherein each of the front and rear support members can contact an underside of the lower cover front part.

This configuration can prevent the rotation of the lower cover front part.

The above-described vehicle seat may be configured such that the front lower cover attachment comprises: left and right side connecting parts (212B) extending rearward from the left and right ends of the front and rear support members, respectively, to connect to the lower brackets; and left and right extension parts (214) extending outward from the left and right side connecting parts, and wherein the lower cover front part is connected to the left and right extension parts on the left and right sides.

In this configuration, the lower cover front part is attached to the front lower cover attachment at a plurality of positions.

The above-described vehicle seat may be configured such that the lower cover front part is connected to at least one of the front and rear support members.

This configuration improves the stability of the lower cover front part with respect to the front lower cover attachment.

The above-described vehicle seat may be configured such that the left and right lower cover side parts overlap the corresponding slide mechanisms, as viewed from above, on the left and right.

In this configuration, each of the lower cover side parts can partially cover a corresponding one of the slide mechanisms.

### EFFECT OF THE INVENTION

As a solution to the above-described task to be accomplished, an aspect of the present invention provides a vehicle seat (1) comprising: a seat body (3) having a seat cushion (7); and a swivel mechanism (2) disposed between a floor (5) and the seat cushion, rotatably supporting the seat cushion so that the seat cushion is rotatable about a rotation axis (A) extending in a vertical direction, wherein the swivel mechanism comprises a base component (41), and a rotating component (42) rotatably supported by the base component and rotatable about the rotation axis, wherein the swivel mechanism comprises a plurality of spacer components (171) and a plurality of biasing components (172) disposed between an outer periphery of the base component and an outer periphery of the rotating component, such that the spacer components (171) inhibit the rotating component from coming close to the base component, and that the biasing components (172) urge the rotating component toward the base component, and wherein the plurality of spacer components and the plurality of biasing components are arranged on an imaginary circle (C) centered on the rotation axis.

In this configuration, the plurality of spacer components (171) and the plurality of biasing components (172) are disposed between the outer periphery of the base component and an outer periphery of the rotating component, which retains a distance between the base component and the rotating component. This configuration suppresses the tilt of the rotating component in the vehicle seat with the swivel mechanism. Moreover, in this configuration, the plurality of spacer components and the plurality of biasing components are arranged on an imaginary circle (C) centered on the rotation axis, which enables well-balanced support of the rotating component relative to the base component, and also enables compact arrangement of the spacer components and the biasing components.

The above-described vehicle seat may be configured such that the base component includes a plurality of support brackets (176), and each of the plurality of support brackets includes the one or more spacer components and the one or more biasing components.

This configuration enables the one or more spacer components and the one or more biasing components to be assembled into a single unit, facilitating assembly work.

The above-described vehicle seat may be configured such that the swivel mechanism includes one or more separation suppressing components (170) provided between the outer periphery of the base component and the outer periphery of the rotating component, and each separation suppressing component includes a lower hook (182) that protrudes upward from an edge of the support bracket, and an upper hook (186) that protrudes downward from the rotating component and bends to face the lower hook from below through a gap.

In this configuration, even when a vehicle collision or similar event occurs and significant forces (loads) are applied to the seat body, the separation suppressing component suppresses the tilt of the rotating component relative to the base component.

The above-described vehicle seat may be configured such that the lower hook is positioned outside the imaginary circle, and either the spacer components or the biasing components are positioned on a radial line extending from the rotation axis to the lower hook.

This configuration enables compact arrangement of the spacer components, the biasing components, and the separation suppressing component.

The above-described vehicle seat may be configured such that each of the support brackets is provided with one of the biasing components positioned between two of the spacer components.

In this configuration, the rotating component is urged downward by the biasing component to contact two rollers, which suppresses the tilt of the rotating component.

The above-described vehicle seat may be configured such that the base component is supported on the floor via left and right slide mechanisms (4), wherein the base component comprises one or more lower brackets (46) coupled to the left and right slide mechanisms, and a base plate (47) supported by the lower brackets, wherein the rotating component comprises a rotating plate (56) rotatably supported by the base plate, and an upper bracket (57) coupled to the rotating plate, wherein the upper bracket is coupled to an upper surface of the rotating plate and also coupled to the seat body, wherein the plurality of spacer components and the plurality of biasing components are arranged between the lower bracket and the upper bracket, and wherein the rotating plate is provided at a vertical position between an upper end and a lower end of each support bracket.

This configuration enables the slide mechanisms and the swivel mechanisms to be made compact.

The above-described vehicle seat may be configured such that each of the support brackets overlaps with one of the left and right slide mechanisms as viewed from above, and part of the rotating plate is positioned below upper ends of the left and right slide mechanisms.

This configuration enables the slide mechanisms and the swivel mechanisms to be made compact.

The above-described vehicle seat may be configured such that each of the biasing component comprises: a locking piece (172A) projecting downward from the rotating component; a support pillar (172B) projecting upward from the base component; a contact piece (172C) supported on the support pillar so that the contact piece can vertically move and contact the locking piece from above; and a biasing member (172D) provided between the support pillar and the contact piece to urge the contact piece downward,

This configuration can urge the rotating component, which is rotatable relative to a fixed part, toward the fixed part side.

The above-described vehicle seat may be configured such that each spacer component includes a roller (171B) rotatably supported by the corresponding support bracket, and can contact the rotating component at the roller.

This configuration can reduce frictional resistance between each of the spacer components and the rotating component as the rotating component rotates.

The above-described vehicle seat may be configured such that part of each of the spacer components is positioned at a vertical position between an upper end of the lower hook and a lower end of the upper hook.

This configuration enables well-balanced arrangement of the spacer components and the corresponding separation suppressing components.

The above-described vehicle seat may be configured such that the seat body comprises a seatback (8) provided at a rear of the seat cushion via a reclining device (35), and a headrest (9) provided at a top of the seatback, and wherein the reclining device enables a user to freely adjust an inclination angle of the seatback relative to the seat cushion.

In this configuration, the seat body, which includes the seat cushion, seatback, headrest, and reclining mechanism, is rotatably supported by the swivel mechanism.

Another aspect of the present invention provides a vehicle seat (1) comprising: a seat body (3) having a seat cushion (7); and a swivel mechanism (2) disposed between a floor (5) and the seat cushion, rotatably supporting the seat cushion so that the seat cushion is rotatable about a rotation axis (A) extending in a vertical direction, wherein the swivel mechanism comprises a base component (41), a rotating component (42) rotatably supported by the base component and rotatable about the rotation axis, and a bearing (63) provided between the base component and the rotating component, wherein the swivel mechanism comprises a plurality of spacer components (171) and a plurality of biasing components (172) disposed between an outer periphery of the base component and an outer periphery of the rotating component, such that the spacer components (171) inhibit the rotating component from coming close to the base component, and that the biasing components (172) urge the rotating component toward the base component, and wherein the bearing is a thrust bearing extending annularly and centered on the rotation axis, and the plurality of spacer components are arranged radially outward of the bearing with respect to the rotation axis.

In this configuration, the spacer components are arranged radially outward of the bearing, which retains a distance between the outer periphery of the base component and the outer periphery of the rotating component, thereby suppressing the tilt of the rotating component in the vehicle seat with the swivel mechanism. Moreover, in this configuration, the plurality of spacer components reduce forces (loads) that can be applied to the bearing, which prevents formation of an imprint of the bearing on the rotating component and base component.

The above-described vehicle seat may be configured such that the swivel mechanism includes one or more separation suppressing components (170) provided between the outer periphery of the base component and the outer periphery of the rotating component, and each separation suppressing component includes a lower hook (182) that protrudes upward from the base component, and an upper hook (186) that protrudes downward from the rotating component and bends to face the lower hook from below through a gap, and wherein each separation suppressing component is positioned radially outward of the corresponding spacer components with respect to the rotation axis.

In this configuration, even when a vehicle collision or similar event occurs and significant forces (loads) are applied to the seat body, the tilt of the rotating component relative to the base component is suppressed.

The above-described vehicle seat may be configured such that at least one of the plurality of spacer components and the corresponding lower hook are positioned on a radial line extending from the rotation axis.

This configuration enables compact arrangement of the spacer component and the corresponding lower hook.

The above-described vehicle seat may be configured such that a lower cover is attached to a peripheral edge of the base component, and the plurality of spacer components are positioned inward of the lower cover, i.e., on the side of the rotation axis.

In this configuration, the spacer components can be hidden by the lower cover.

Yet another aspect of the present invention provides a vehicle seat (1) comprising: a seat body (3) having a seat cushion (7); and a swivel mechanism (2) disposed between a floor (5) and the seat cushion, rotatably supporting the seat cushion so that the seat cushion is rotatable about a rotation axis (A) extending in a vertical direction, wherein the swivel mechanism comprises a base component (41), and a rotating component (42) rotatably supported by the base component and rotatable about the rotation axis, wherein the swivel mechanism comprises a plurality of spacer components (171) and a plurality of biasing components (172) disposed between an outer periphery of the base component and an outer periphery of the rotating component, such that the spacer components (171) inhibit the rotating component from coming close to the base component, and that the biasing components (172) urge the rotating component toward the base component, wherein the plurality of spacer components are provided on the base component, each comprising a support shaft (171A) extending radially outward from the rotation axis, and a roller (171B) rotatably supported on the support shaft, wherein each roller has an outer peripheral surface formed as a tapered surface whose diameter increases radially outward from the rotation axis, wherein the rotating component has an inclined surface (188) which is inclined upward radially outward from the rotation axis, and wherein the plurality of rollers are in contact with the inclined surface.

In this configuration, the plurality of rollers can support both vertical forces (loads) applied from the rotating component and radial forces (loads) applied in radial directions extending from the rotation axis, which enables the plurality of rollers to reduce horizontal positional deviation of the rotating component relative to a fixed part.

The above-described vehicle seat may be configured such that each of the plurality of support shafts is provided with a biasing member (172D) that urges the corresponding roller radially inward toward the rotation axis.

This configuration can bring the plurality of rollers into contact with the inclined surface.

The above-described vehicle seat may be configured such that a plurality of support brackets are provided on the base component, and support the corresponding support shafts.

In this configuration, the one or more rollers, the one or more support shafts, and a corresponding support bracket can be assembled into a single unit, facilitating assembly work in which the rollers are installed onto the base component.

The above-described vehicle seat may be configured such that each of the plurality of support brackets includes an inner wall (171C) and an outer wall (171D) which, respectively, support an inner end and an outer end of the corresponding support shaft(s), the inner and outer ends being positioned radially inward toward and outward from the rotation axis, respectively.

This configuration enables stable support of each support shaft.

The above-described vehicle seat may be configured such that each of the plurality of biasing members is a coil spring and provided around the outer end side of a corresponding support shaft.

This configuration enables a structure where the biasing member is mounted to the corresponding support shaft to be made simple.

The above-described vehicle seat may be configured such that each of the plurality of rollers has a recess (171F) at its radially outer end and recessed inward toward the rotation axis, wherein an end portion of each biasing member is received within the corresponding recess.

This configuration prevents horizontal positional deviation of the biasing member relative to the roller.

The above-described vehicle seat may be configured such that an upper end of the inner wall of the support bracket is positioned below the upper edge of the radially inner end of the corresponding roller(s), and an upper end of the outer wall of the support bracket is positioned below the upper edge of the radially outer end of the corresponding roller(s).

This configuration prevents the inner wall and the outer wall from contacting the rotating component.

The above-described vehicle seat may be configured such that a bearing (63) having a ring shape centered on the rotation axis is provided between the base component and the rotating component, and the plurality of rollers are provided radially outward of the bearing.

In this configuration, the plurality of rollers are provided radially outward of the bearing, which retains a distance between the outer periphery of the base component and the outer periphery of the rotating component. This suppresses the tilt of the rotating component in the vehicle seat.

The above-described vehicle seat may be configured such that the swivel mechanism includes one or more separation suppressing components (170) provided between the outer periphery of the base component and the outer periphery of the rotating component, and each separation suppressing component includes a lower hook (182) that protrudes upward from the base component, and an upper hook (186) that protrudes downward from the rotating component and bends to face the lower hook from below through a gap, and wherein each separation suppressing component is positioned radially outward of the corresponding roller(s) with respect to the rotation axis.

In this configuration, even when a vehicle collision or similar event occurs and significant forces (loads) are applied to the seat body, the tilt of the rotating component relative to the base component is suppressed.

The above-described vehicle seat may be configured such that each biasing component is positioned radially inward of the corresponding separation suppressing component with respect to the rotation axis.

This configuration enables compact arrangement of the biasing components.

As a solution to the above-described task to be accomplished, an aspect of the present invention provides a vehicle seat (1) comprising: a seat body (3) having a seat cushion (7); a swivel mechanism (2) disposed between a floor (5) and the seat cushion, rotatably supporting the seat cushion so that the seat cushion is rotatable about a rotation axis (A) extending in a vertical direction; a lifting mechanism (110) provided between the swivel mechanism and the seat cushion, the lifting mechanism supporting the seat cushion so that the seat cushion can move vertically between a high position and a low position with respect to the swivel mechanism; a swivel mechanism cover (200) provided on the swivel mechanism; and side covers (21) provided on left and right sides of the seat cushion, wherein when the seat cushion is at the high position and at the low position, the swivel mechanism cover overlaps the side covers as viewed along a left-right direction.

In this configuration, even when the seat cushion is raised by the lifting mechanism, the swivel mechanism cover overlaps the side covers as viewed along the left-right direction, resulting in that no gap is formed between the seat cushion and the swivel mechanism cover. This configuration prevents foreign matters from entering the vehicle seat with the swivel mechanism and lifting mechanism.

The above-described vehicle seat may be configured such that the swivel mechanism comprises a base component (41) and a rotating component (42) rotatably supported by the base component, and wherein the swivel mechanism cover includes an upper cover (201) provided on the rotating component, and when the seat cushion is at the high position and when at the lower position, the upper cover overlaps the side covers as viewed along the left-right direction.

In this configuration, even when the seat cushion is raised by the lifting mechanism, the upper cover overlaps the side covers as viewed along the left-right direction, resulting in that no gap is formed between the seat cushion and the upper cover.

The above-described vehicle seat may be configured such that, when the seat cushion is at the high position and when at the lower position, an upper end of each upper cover is positioned above the lower end of the corresponding side cover.

In this configuration, even when the seat cushion is raised by the lifting mechanism, no gap is formed between the seat cushion and the upper cover.

The above-described vehicle seat may be configured such that the upper cover includes an upper cover upper walls (223A) extending in the lateral direction, and an upper cover extension walls (223C) extending upward from the upper cover upper wall(s), and the side covers overlap the upper cover upper walls as viewed from above, wherein, when the seat cushion is at the high position and when at the lower position, an upper end of each upper cover extension wall is positioned above the lower end of the corresponding side cover.

In this configuration, even when the seat cushion is raised by the lifting mechanism, no gap is formed between the seat cushion and the upper cover.

The above-described vehicle seat may be configured such that the lower ends of the side covers overlap the upper cover as viewed along the vertical direction, wherein, when the seat cushion is at the high position and when at the lower position, the lower end of each side cover is positioned below the upper end of the corresponding upper cover.

In this configuration, even when the seat cushion is raised by the lifting mechanism, no gap is formed between the seat cushion and the upper cover.

The above-described vehicle seat may be configured such that the lower ends of the side covers overlap the upper cover upper walls as viewed along the vertical direction, wherein, when the seat cushion is at the high position and when at the lower position, the lower ends of the side covers are positioned below the upper ends of the upper cover upper walls.

In this configuration, even when the seat cushion is raised by the lifting mechanism, no gap is formed between the seat cushion and the upper cover.

The above-described vehicle seat may be configured such that the upper cover is attached to upper cover attachments (225) of the rotating component, and the upper cover attachments are positioned inward of the side covers with regard to the rotation axis of the swivel mechanism.

In this configuration, the upper cover attachments are hidden by the side covers.

The above-described vehicle seat may be configured such that a front cover (240) is provided between a front portion of the seat cushion and the upper cover, and the upper cover attachments are positioned rearward of the front cover.

In this configuration, the upper cover attachments are hidden by the front cover.

The above-described vehicle seat may be configured such that the upper cover extension walls are attached to the corresponding upper cover attachments.

This configuration enables the stable positioning of the upper cover extension walls.

The above-described vehicle seat may be configured such that the swivel mechanism includes one or more separation suppressing components (170) provided between the outer periphery of the base component and the outer periphery of the rotating component, and each separation suppressing component includes a lower hook (182) that protrudes upward from the base component, and an upper hook (186) that protrudes downward from the rotating component and bends to face the lower hook from below through a gap, and wherein the upper cover attachments are positioned radially outward of the separation suppressing components with respect to the rotation axis.

In this configuration, the upper cover can be fixed to the outer periphery of the rotating component.

The above-described vehicle seat may be configured such that the base component is supported on the floor via left and right slide mechanisms (4), wherein the base component comprises one or more lower brackets (46) coupled to the left and right slide mechanisms, and a base plate (47) supported by the lower brackets, wherein the rotating component comprises a rotating plate (56) rotatably supported by the base plate, and an upper bracket (57) coupled to the rotating plate, wherein the lifting mechanism is coupled to the upper bracket, wherein each of the slide mechanisms comprises a lower rail (36) coupled to the floor and an upper rail (37) slidably supported on the lower rail, wherein the swivel mechanism cover includes a lower cover (201) provided on the base component, wherein the lower cover covers at least parts of the lower brackets and at least parts of the upper rails, and wherein a lower end position of the upper cover is positioned below an upper end position of the lower cover.

In this configuration, a gap between the upper cover and lower cover can be eliminated.

The above-described vehicle seat may be configured such that a lower end of the upper cover is formed in a circular shape centered on the rotation axis, wherein an upper end of the lower cover is formed in a circular shape centered on the rotation axis, and positioned radially inward of the lower end of the upper cover.

This configuration enables the outer peripheries of the upper cover and lower cover to be circular-shaped, which ensures that the outer shapes of the upper cover and lower cover remain circular even when the swivel mechanism rotates.

The above-described vehicle seat may be configured such that the seat body comprises a seatback (8) provided at a rear of the seat cushion via a reclining device (35), and a headrest (9) provided at a top of the seatback, wherein the reclining device enables a user to freely adjust an inclination angle of the seatback relative to the seat cushion.

In this configuration, the seat body, which includes the seat cushion, seatback, headrest, and reclining mechanism, is rotatably supported by the swivel mechanism.

Another aspect of the present invention provides a vehicle seat (1) comprising: a seat body (3) having a seat cushion (7); a swivel mechanism (2) disposed between a floor (5) and the seat cushion, rotatably supporting the seat cushion so that the seat cushion is rotatable about a rotation axis (A) extending in a vertical direction; and a swivel mechanism cover (200) provided on the swivel mechanism, wherein the swivel mechanism comprises a base component (41), and a rotating component (42) rotatably supported by the base component, wherein the swivel mechanism cover includes an upper cover (201) provided on the base component, and wherein an upper end of the lower cover and a lower end of the upper cover overlap each other as viewed radially from the rotation axis.

In this configuration, a gap between the upper cover and lower cover can be eliminated.

The above-described vehicle seat may be configured such that the lower cover includes lower cover arc parts (204A, 205A, 206A), each of which extends in an arc shape centered on the rotation axis and partially extends upward, wherein the upper cover includes upper cover arc parts (221B, 222B, 223B), each of which extends in an arc shape centered on the rotation axis and extends partially downward, and wherein the lower cover arc parts and the upper cover arc parts each outline a circular shape with the same outer diameter.

This configuration enables the outer peripheries of the upper cover and lower cover to be circular-shaped, which ensures that the outer shapes of the upper cover and lower cover remain circular even when the swivel mechanism rotates.

The above-described vehicle seat may be configured such that one of the lower cover and the upper cover has a partition wall (230) positioned radially inward thereof, and wherein the partition wall overlaps the lower cover arc parts and the upper cover arc parts, as viewed along the horizontal direction.

In this configuration, the partial wall can eliminate a gap between the upper cover and lower cover.

The above-described vehicle seat may be configured such that the partition wall is formed in a cylindrical shape centered on the rotation axis, and the outer diameter of the partition wall is smaller than the outer diameter of the circle of the shapes of arc which the lower cover arc parts have.

In this configuration, the partition wall is hidden inside by the upper cover and the lower cover.

The above-described vehicle seat may be configured such that the partition wall is positioned to extend along the inner surfaces of the lower cover arc parts.

This configuration prevents positional deviation of the partition wall.

The above-described vehicle seat may be configured such that the swivel mechanism includes one or more separation suppressing components (170) provided between the outer periphery of the base component and the outer periphery of the rotating component, and each separation suppressing component includes a lower hook (182) that protrudes upward from the base component, and an upper hook (186) that protrudes downward from the rotating component and bends to face the lower hook from below through a gap, and wherein the separation suppressing components are arranged radially inward of the partition wall.

In this configuration, the separation suppressing components can be hidden inside by the upper cover and the lower cover.

The above-described vehicle seat may be configured such that a ring-shaped flange (231) extending radially inward is provided at the lower end of the partition wall, and protrusions (234) capable of engaging with the upper hooks are provided on the upper surface of the flange.

This configuration suppresses vertical displacement of the rotating component relative to the base component.

The above-described vehicle seat may be configured such that a bearing (63) having a ring shape centered on the rotation axis is provided between the base component and the rotating component, and the flange is positioned radially outward of the bearing.

In this configuration, the protrusion of the flange and the upper hooks are in contact with each other at positions radially outward of the bearing. This configuration can suppress vertical displacement of the rotating component relative to the base component at positions radially outward of the bearing.

The above-described vehicle seat may be configured such that the base component is supported on the floor via left and right slide mechanisms (4), wherein the base component comprises one or more lower brackets (46) coupled to the left and right slide mechanisms, and a base plate (47) supported by the lower brackets, wherein the lower cover comprises a lower cover front part (204) positioned frontward of the base plate, a lower cover rear part (205) positioned rearward of the base plate, and left and right lower cover side parts (206) positioned on the left and right sides of the base plate, and wherein the lower cover front part and the lower cover rear part are each coupled to the left and right lower cover side parts.

This configuration enables the lower cover to be positioned around the base plate subsequent to the formation of the swivel mechanism.

The above-described vehicle seat may be configured such that the lower bracket 46 is provided with a front lower cover attachment (211) which extends in the left-right direction in front of the lower bracket and is coupled thereto at its left and right ends, and wherein the lower cover front part is attached to the front lower cover attachment.

In this configuration, the lower cover front part can be positioned in front of the lower bracket.

The above-described vehicle seat may be configured such that the front lower cover attachment comprises front and rear support members (212A, 213A) spaced apart from each other in the front-rear direction and extending parallel to each other in the left-right direction, wherein each of the front and rear support members can contact an underside of the lower cover front part.

This configuration can prevent the rotation of the lower cover front part.

The above-described vehicle seat may be configured such that the front lower cover attachment comprises: left and right side connecting parts (212B) extending rearward from the left and right ends of the front and rear support members, respectively, to connect to the lower brackets; and left and right extension parts (214) extending outward from the left and right side connecting parts, and wherein the lower cover front part is connected to the left and right extension parts on the left and right sides.

In this configuration, the lower cover front part is attached to the front lower cover attachment at a plurality of positions.

The above-described vehicle seat may be configured such that the lower cover front part is connected to at least one of the front and rear support members.

This configuration improves the stability of the lower cover front part with respect to the front lower cover attachment.

The above-described vehicle seat may be configured such that the left and right lower cover side parts overlap the corresponding slide mechanisms, as viewed from above, on the left and right.

In this configuration, each of the lower cover side parts can partially cover a corresponding one of the slide mechanisms.

### BRIEF DESCRIPTION OF THE DRAWINGS

[Figure 1] Figure 1 is a perspective view of a vehicle seat according to one embodiment of the present invention;
[Figure 2] Figure 2 is a perspective view of a frame structure of the vehicle seat;
[Figure 3] Figure 3 is a perspective view of a swivel mechanism, where an upper bracket is not shown in this drawing;
[Figure 4] Figure 4 is a perspective view of the swivel mechanism, where the upper bracket and a swivel mechanism cover are not shown in this drawing;
[Figure 5] Figure 5 is an exploded perspective view of the swivel mechanism;
[Figure 6] Figure 6 is a bottom view of the swivel mechanism;
[Figure 7] Figure 7 is a cross-sectional view of the swivel mechanism;
[Figure 8] Figure 8 is a cross-sectional view of the swivel mechanism;
[Figure 9] Figure 9 is a bottom view showing an important part of the swivel mechanism;
[Figure 10] Figure 10 is a perspective view showing an important part of the swivel mechanism;
[Figure 11] Figure 11 is a cross-sectional view of a spacer component;
[Figure 12] Figure 12 is a cross-sectional view of a biasing component and a separation suppressing component;
[Figure 13] Figure 13 is a cross-sectional view of the swivel mechanism;
[Figure 14] Figure 14 is an exploded perspective view of a swivel mechanism cover;
[Figure 15] Figure 15 is a perspective view of a partition wall and a flange
[Figure 16] Figure 16 is a cross-sectional view of the partition wall and the flange;
[Figure 17] Figure 17 is a cross-sectional view of the swivel mechanism;
[Figure 18] Figure 18 is a cross-sectional view showing a positional relationship in which an upper cover side part and a corresponding side cover are arranged according to a variant of the embodiment of the present invention; and
[Figure 19] Figure 19 is a cross-sectional view showing a positional relationship in which an upper cover side part and a corresponding side cover are arranged according to another variant of the embodiment of the present invention.

### DESCRIPTION OF THE PREFERRED EMBODIMENT(S)

Embodiments of a vehicle seat according to the present invention will be described with reference to the appended drawings. The vehicle seat of the present invention can be used in known automobiles such as sedan cars and minivans. Such vehicles may be autonomous vehicles.

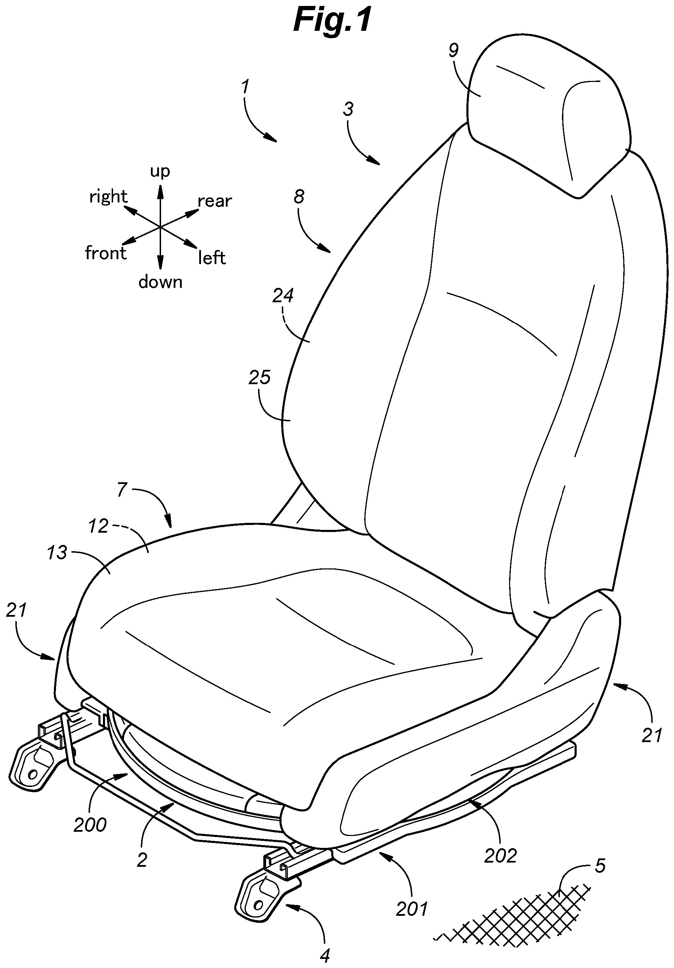

As shown in Figure 1, a vehicle seat 1 includes a swivel mechanism 2. The vehicle seat 1 further includes a seat body 3 and left and right slide mechanisms 4. The swivel mechanism 2 is provided on a floor 5 of a vehicle via the left and right slide mechanisms 4. The seat body 3 includes a seat cushion 7, a seatback 8, and a headrest 9. The seat cushion 7 supports buttocks of a user from below. The seatback 8 extends upward from a rear part of the seat cushion 7. The seatback 8 supports the user's back from behind. The headrest 9 is provided at the top of the seatback 8.

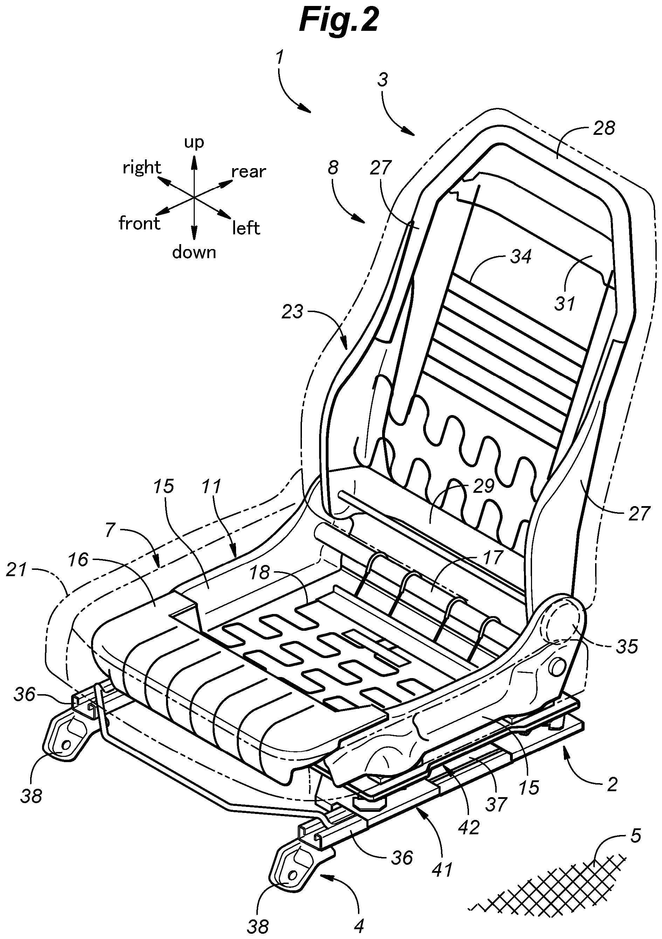

As shown in Figure 2, the seat cushion 7 includes a seat cushion frame 11 that serves as a structural frame of the seat cushion, a pad 12 supported by the seat cushion frame 11, and a skin 13 that covers a surface of the pad 12. The seat cushion frame 11 includes left and right seat cushion side members 15 extending in a front-rear direction (i.e., a longitudinal direction); a front member 16 extending in a left-right direction (i.e., a lateral direction) and coupled to front ends of the left and right seat cushion side members 15; and a rear member 17 extending in the left-right direction and coupled to rear ends of the left and right seat cushion side members 15. A flexible support member 18 spans across the front member 16 and the rear member 17 to support the user's buttocks. The support member 18 preferably includes a plurality of metal wires and flexible plastic plates connected to each of the metal wires. As shown in Figure 1, side covers 21 are provided on the left and right sides of the seat cushion 7. The side covers 21 are supported by the seat cushion side members 15 and hide the ends of the pad 12 and the skin 13. The side covers 21 are preferably formed of a plastic material.

As shown in Figure 2, the seatback 8 includes a seatback frame 23 that serves as a structural frame of the seatback, a pad 24 supported by the seatback frame 23, and a skin 25 that covers a surface of the pad 24. The seatback frame 23 includes: left and right seatback side members 27 extending in an up-down direction (i.e., a vertical direction); an upper member 28 extending in the left-right direction and connected to upper ends of the left and right seatback side members 27; a lower member 29 extending in the left-right direction and connected to lower ends of the left and right seatback side members 27; and a middle member 31 extending in the left-right direction between the upper member 28 and the lower member 29 and connected to the left and right seatback side members 27. A flexible support member 34 spans across the left and right seatback side members 27, middle member 31, and lower member 29 to support the user's back. The support member 34 may be formed by a plurality of metal wires. Lower ends of the left and right seatback side members 27 are connected to the rear ends of the corresponding seat cushion side members 15 via a reclining device 35. The reclining device 35 enables a user to freely adjust an inclination angle of the seatback 8 relative to the seat cushion 7.

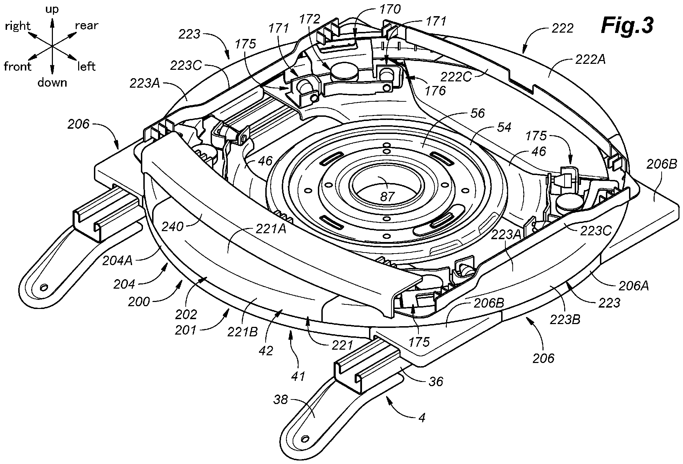

As shown in Figures 3, 4, 5, and 6, the left and right slide mechanisms 4 include left and right lower rails 36 extending in the front-rear direction, and left and right upper rails 37 supported on the corresponding lower rails 36 for sliding movement in the front-rear direction, respectively. Each of the lower rails 36 is connected to the floor 5 via a foot 38. A slide lock device (not shown) is provided between each lower rail 36 and a corresponding one of the upper rails 37. The left and right slide lock devices are interconnected by a slide operation lever extending in the left-right direction. The slide operation lever can be operated by a user to enable sliding movement of the upper rails 37 relative to the lower rails 36.

As shown in Figures 1 to 6, the swivel mechanism 2 is provided between the floor 5 and the seat cushion 7, and rotatably supports the seat cushion 7 so that the seat cushion 7 can rotate about a rotation axis (axis A) extending in the vertical direction. The swivel mechanism 2 includes a base component 41 and a rotating component 42 rotatably supported on the base component 41. The swivel mechanism 2 further includes a rotation actuator 43 and a rotation lock device 44.

The base component 41 is provided on the side of the floor 5. In the present embodiment, the base component 41 is provided on the floor 5 via the slide mechanisms 4. The base component 41 includes lower brackets 46 each coupled to left and right upper rails 37, and a base plate 47 supported by the lower brackets 46. In the present embodiment, the base component 41 includes front and rear lower brackets 46. The front and rear lower brackets 46 are formed in a mutually symmetrical configuration in the front-rear direction. Each lower bracket 46 extends in the left-right direction and is connected at both ends to the left and right upper rails 37. The front and rear lower brackets 46 are spaced apart in the front-rear direction. The left and right ends of the front lower bracket 46 are connected to front end parts of the corresponding left and right upper rails 37. The left and right ends of the rear lower bracket 46 are connected to rear end parts of the corresponding left and right upper rails 37. The base plate 47 is formed in a circular shape, with its surfaces facing up and down. The base plate 47 includes a front part connected to a middle part of the front lower bracket 46, and a rear part connected to a middle part of the rear lower bracket 46. The base plate 47 is supported on the left and right upper rails 37 via the front and rear lower brackets 46.

Each of the base plate 47 and the front and rear lower brackets 46 may be formed from a metal plate. Each lower bracket 46 may be formed with a cross section having a groove shape that opens downward.

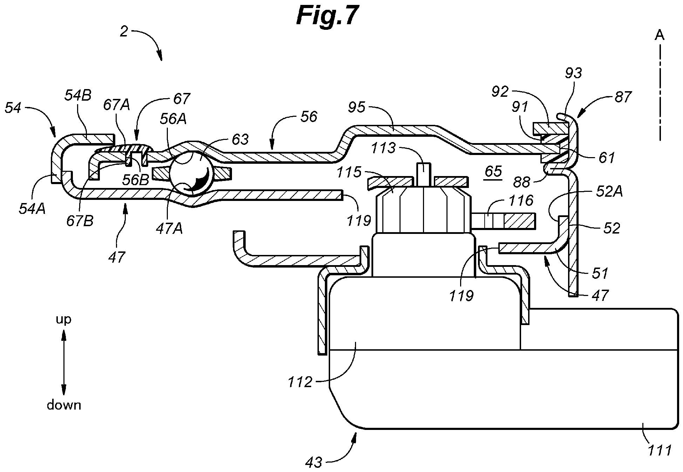

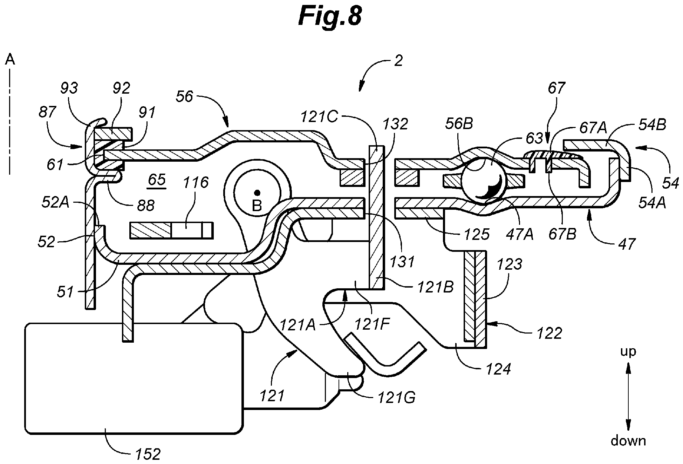

As shown in Figures 7 and 8, a first bulge portion 51, which bulges downward, is formed in a central part of the base plate 47. The first bulge portion 51 is formed in a cylindrical shape with a bottom. The first bulge portion 51 has a first bearing hole 52 at the center thereof, the first bearing hole 52 having a circular shape and extending through a thickness direction of the first bulge portion. The first bearing hole 52 is centered on an axis A extending in the vertical direction. An annular rim wall 52A, projecting upward or downward, may be formed at a peripheral edge of the first bearing hole 52.

A ring-shaped fixed member 54 is bonded to an outer periphery of the base plate 47. The fixed member 54 includes a cylindrical tube wall 54A extending along the outer periphery of the base plate 47 and extending upward, and an inner flange 54B extending radially inward from the upper end of the tube wall 54A. The cylindrical tube wall 54A is welded to the outer periphery of the base plate 47. The inner flange 54B is formed annularly, with its surface facing upward.

The rotating component 42 is rotatably supported on the base component 41. The rotating component 42 includes a rotating plate 56 rotatably supported on the upper surface of the base plate 47, and an upper bracket 57 connected to the rotating plate 56. Each of the rotating plate 56 and the upper bracket 57 is formed from a metal plate.

The rotating plate 56 is formed as a circular plate with its surfaces facing up and down. The rotating plate 56 has a second bearing hole 61 at the center thereof, the second bearing hole 61 having a circular shape and extending through in the thickness direction of the rotating plate. The second bearing hole 61 is centered on the axis A.

The rotating plate 56 is supported on the upper surface of the base plate 47 via a bearing 63. The bearing 63 has an annular shape and is provided centered on the axis A. The bearing 63 is positioned between the upper surface of the outer periphery of the base plate 47 and the lower surface of the outer periphery of the rotating plate 56. The bearing 63 may be a thrust bearing. In the present embodiment, the bearing 63 is a ball bearing. A ball bearing includes a plurality of balls and an annular retainer that rotatably supports the plurality of balls. A first bearing groove 47A is formed on the upper surface of the outer periphery of the base plate 47 for receiving a lower portion of the bearing 63. A second bearing groove 56A is formed on the lower surface of the outer periphery of the rotating plate 56 for receiving an upper portion of the bearing 63. A space 65 is formed between a central part of the rotating plate 56 and the first bulge portion 51 of the base plate 47.

The fixed member 54 extends upward from the outer periphery of the rotating plate 56. More specifically, the inner flange 54B of the fixed member 54 extends upward from the outer periphery of the rotating plate 56. A protector 67 is provided on the outer periphery of the upper surface of the rotating plate 56. The protector 67 includes a ring-shaped sliding member 67A extending along the outer periphery of the upper surface of the rotating plate 56, and a plurality of claws 67B projecting downward from the sliding member 67A. The sliding member 67A has a cross section of a plate-like member. The plurality of claws 67B are engaged in a plurality of holes 56B formed in the rotating plate 56. The outer periphery of the rotating plate 56 slidably contacts the inner flange 54B via the sliding member 67A of the protector 67. The protector 67 is preferably formed of a plastic material having a lower frictional resistance than the rotating plate 56.

A support tubular member 87 extending vertically is inserted into the first bearing hole 52 and the second bearing hole 61. The support tubular member 87 is a cylindrical tube with both ends open. The support tubular member 87 is formed of metal. An annular rib 88 bulging outward is formed on an outer circumference of the support tubular member 87. A tubular bushing 91 is fitted onto an edge of the second bearing hole 61 of the rotating plate 56. The bushing 91 is supported by part of the support tubular member 87 above the annular rib 88. An anti-drop ring 92 is provided above the bushing 91. The upper end of the support tubular member 87 is expanded to form an expanded portion 93, where the expanded portion 93 is formed by the swage pressing of the upper end of the support tubular member. The bushing 91 and the anti-drop ring 92 are clamped between the annular rib 88 and the expanded portion 93. With this configuration, the vertical position of the rotating plate 56 is fixed relative to the support tubular member 87. The support tubular member 87 is rotatably supported in the second bearing hole 61 of the rotating plate 56 via the bushing 91.

The first bearing hole 52 of the base plate 47 is positioned below the annular rib 88. A part of the support tubular member 87 below the annular rib 88 may be rotatably supported in the first bearing hole 52 or may be welded to the first bearing hole 52. The base plate 47 and the rotating plate 56 are positioned on the axis A by the support tubular member 87.

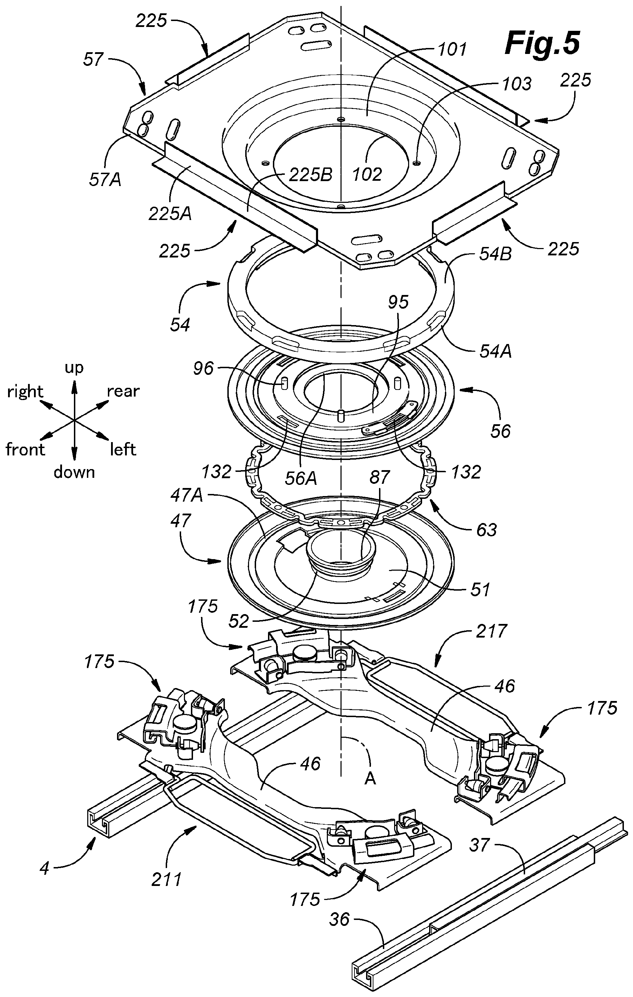

As shown in Figure 5, an annular protrusion 95 bulging upward is formed radially inward of the second bearing groove 56A of the rotating plate 56. The protrusion 95 is formed in an annular shape centered on the axis A. A plurality of bolts 96 extending upward are provided on the protrusion 95. The bolts 96 may be stud bolts.

The upper bracket 57 is substantially formed as a plate with its surfaces facing up and down. The upper bracket 57 preferably has a rectangular shape as viewed from above. A recess 101, which is recessed downward, is formed at the center of the upper bracket 57. An opening 102, which extends vertically through the recess 101, is formed at the center of the recess 101. A plurality of fastening holes 103, through which the plurality of bolts 96 extend, are formed at the bottom of the recess 101. The rotating plate 56 and the upper bracket 57 are fastened together by nuts threaded onto the bolts 96. The upper bracket 57 is larger than the rotating plate 56 as viewed from above. The upper bracket 57 vertically faces the front and rear lower brackets 46.

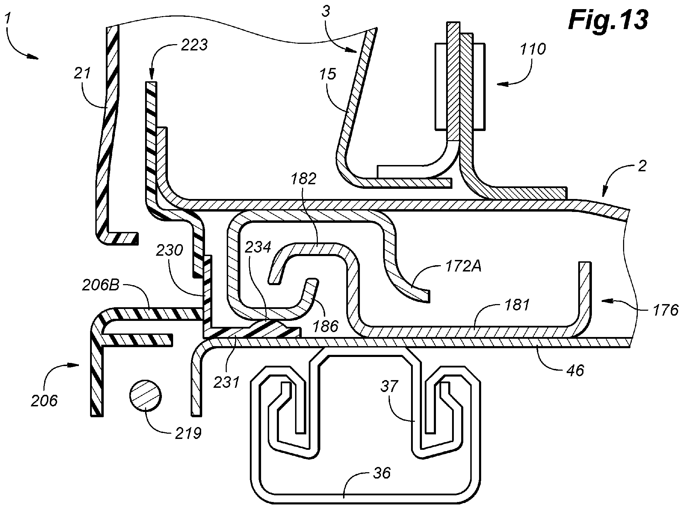

As shown in Figure 13, a lifting mechanism 110 is provided between the swivel mechanism 2 and the seat cushion 7. The lifting mechanism 110 is provided between the upper bracket 57 and the left and right seat cushion side members 15. The lifting mechanism 110 includes a plurality of links that connect the upper surface of the upper bracket 57 to the left and right seat cushion side members 15, and an electric motor for driving the links. For example, sector gears may be provided on the links, and a pinion meshing with the sector gears may be connected to the output shaft of the electric motor via a reduction mechanism. Accordingly, the links rotate in response to the rotation of the electric motor, thereby lifting and lowering the seat cushion 7. The lifting mechanism 110 supports the seat cushion 7 so that the seat cushion can move vertically between a high position and a low position relative to the swivel mechanism 2.

As shown in Figure 7, the rotation actuator 43 is mounted on the underside of the base plate 47. The rotation actuator 43 rotates the rotating plate 56 relative to the base plate 47. The rotation actuator 43 includes an electric motor 111 and a reduction mechanism 112. In the present embodiment, the reduction mechanism 112 includes a pinion 115 coupled to the output shaft 113 of the electric motor 111, and a gear 116 coupled to the rotating plate 56. The pinion 115 and the gear 116 are spur gears. The gear 116 is a gear centered on the axis A.

The rotation actuator 43 may be coupled to the underside of the base plate 47 via a mount. The output shaft 113 of the rotation actuator 43 extends upward from the reduction mechanism 112. The output shaft 113 extends into the space 65 through a through hole 119 formed in the base plate 47. The pinion 115 coupled to the output shaft 113 is positioned within the space 65 and meshes with the gear 116. The electric motor 111 and the reduction mechanism 112 are positioned below the base plate 47.

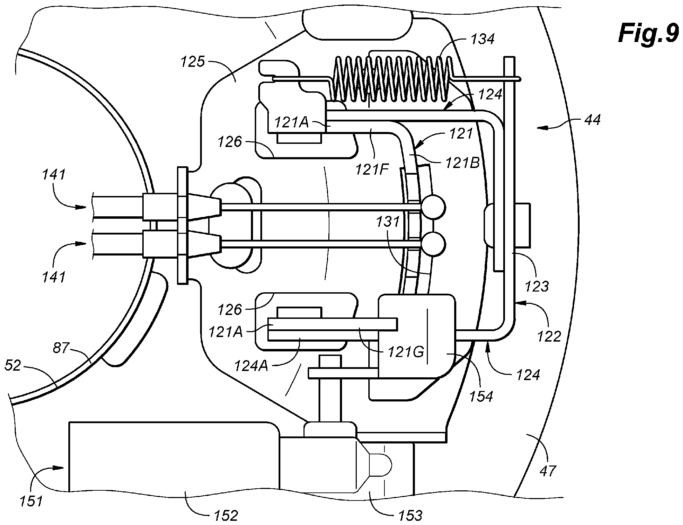

As shown in Figures 8 and 9, a rotation lock device 44 is mounted on the underside of the base plate 47. The rotation lock device 44 selectively inhibits the rotation of the rotating plate 56 relative to the base plate 47. The rotation lock device 44 includes a holder 122 protruding downward from the bottom surface of the base plate 47, and a locking claw 121 rotatably supported by the holder 122, which extends through the base plate 47 to engage the rotating plate 56. The locking claw 121 is displaced between a locked position in which the locking claw 121 is engaged with the rotating plate 56 and an unlocked position in which the locking claw 121 is disengaged from the rotating plate 56.

A holder 122 includes a circumferential wall 123 extending in a circumferential direction centered on the axis A, which is the rotation axis of the rotating plate 56, and a pair of end walls 124 extending radially inward from both ends of the circumferential wall 123, toward the axis A. The holder 122 further includes a bottom plate 125 extending along the underside of the base plate 47 and coupled to the underside of the base plate 47. The bottom plate 125 extends along the underside of the first bulge portion 51. The circumferential wall 123 and the pair of end walls 124 protrude downward from the bottom plate 125. The pair of end walls 124 are connected to the bottom plate 125. The circumferential wall 123 may also be connected to the bottom plate 125. Each of the circumferential wall 123 and the pair of end walls 124 is formed by the bending of a metal plate. Each of the circumferential wall 123 and the pair of end walls 124 may be formed by the combining of a plurality of metal plates.

A pair of openings 126 are defined in and vertically extend through both the bottom plate 125 and the first bulge portion 51. Each of the openings 126 is formed at a position of a corresponding one of the end walls 124. Each end wall 124 has an extension 124A extending upward from the base plate 47 through the corresponding opening 126. The upper end of each extension 124A is positioned within the space 65. The upper end of each extension 124A extends above the gear 116.

The locking claw 121 includes: a pair of arms 121A, each arm being rotatably supported on a corresponding one of the end walls 124; a beam 121B connecting the tips of the pair of arms 121A; and a claw 121C projecting from the beam 121B. Each arm 121A is rotatably supported on a corresponding extension 124A to be rotatable about an axis B (second axis). The axis B forms the rotation axis of the locking claw 121. The axis B is positioned above the base plate 47 and may also be positioned above the gear 116. Each of the pair of arms 121A extends downward from the space 65 through the corresponding opening 126 to a point below the base plate 47. The pair of arms 121A extend along the corresponding end walls 124 and are in sliding contact with the corresponding end walls 124. The beam 121B is positioned below the base plate 47 and extends horizontally.

The base plate 47 and bottom plate 125 define an insertion hole 131 extending therethrough in the vertical direction. The insertion hole 131 extends circumferentially about the axis A. The rotating plate 56 has a plurality of locking holes 132 formed therein, with which the locking claw 121 can be selectively engaged. Each locking hole 132 extends along the circumferential direction centered on the axis A. The plurality of locking holes 132 are provided at their positions that are rotationally symmetric about the axis A. When the rotating plate 56 is at a predetermined rotational position relative to the base plate 47, the insertion hole 131 faces one of the locking holes 132. The locking claw 121 extends through the insertion hole 131 and engages the locking hole 132 at the locked position, and disengages from both the insertion hole 131 and the locking hole 132 at the unlocked position.

When the rotating plate 56 is at its initial position, the seat body 3 is directed frontward. As shown in Figure 8, the claw 121C of the locking claw 121 which extends through the insertion hole 131 and engages one of the plurality of locking holes 132 restricts the rotation of the rotating plate 56 relative to the base plate 47.

As shown in Figure 9, a biasing member 134 provided between the locking claw 121 and the holder 122, urges the locking claw 121 toward the locked position. In the present embodiment, the biasing member 134 is a tension coil spring. The biasing member 134 may be connected to the arms 121A and the circumferential wall 123.

The locking claw 121 is connected to a manual operation lever via a control cable 141. When a user pulls the manual operation lever, the control cable 141 pulls the locking claw 121 from the locked position to the unlocked position, which allows the rotating component 42 to rotate relative to the base component 41. When the user stops operating the manual operation lever, a biasing force provided by the biasing member 134 moves the locking claw 121 from the unlocked position to the locked position. In other words, the rotation lock device 44 moves between its locked state and unlocked state based on the user's manual operation.

The rotation lock device 44 includes an unlock actuator 151 that moves the locking claw 121 from the locked position to the unlocked position. The unlock actuator 151 includes an electric motor 152, a reduction mechanism 153 that reduces and transmits the driving force of the electric motor 152, and an arm 154 provided on the output shaft of the reduction mechanism 153. The arm 154 is engaged with the locking claw 121. A contact part 121G, projecting downward, is provided at one arm tip 121F of the locking claw 121. The arm 154 presses the contact part 121G, thereby moving the locking claw 121 from the locked position to the unlocked position.

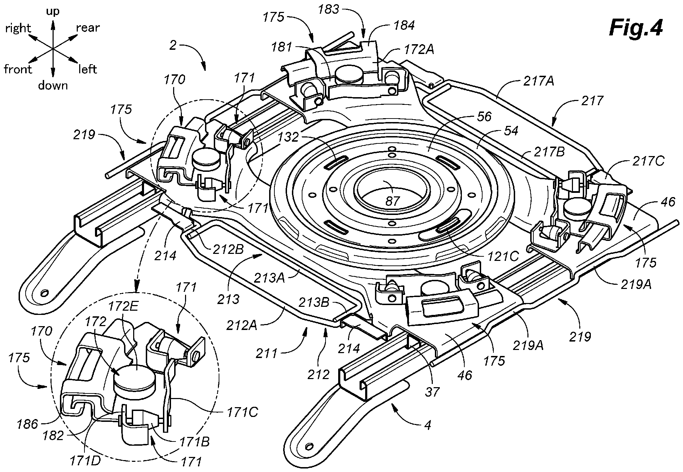

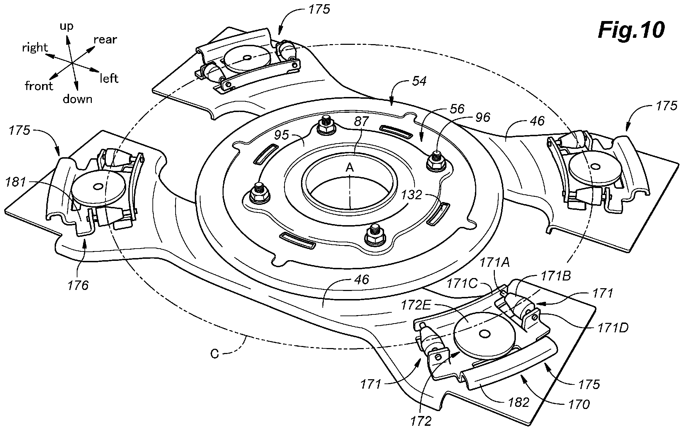

As shown in Figures 4 and 10, a plurality of separation suppressing components 170, a plurality of spacer components 171, and a plurality of biasing components 172 are provided between the outer periphery of the base component 41 and an outer periphery of the rotating component 42. A combination of the one or more separation suppressing components 170, the one or more spacer components 171, and the one or more biasing components 172 form a unit 175. In the present embodiment, the four units 175 are formed, each including one separation suppressing component 170, two spacer components 171, and one biasing component 172. Each of the units 175 has the same configuration. The four units 175 are spaced apart along an imaginary circle centered on the axis A. The four units 175 are positioned at the left and right ends of each of the front and rear lower brackets 46.

Each unit 175 includes a support bracket 176 provided on the base component 41. The support bracket 176 has a bottom plate 181 coupled to the upper surface of the corresponding lower bracket 46. A lower hook 182 projecting upward is provided on the radially outer edge of the bottom plate 181, the outer edge extending along a circular line centered on the axis A. An upper portion of the lower hook 182 extends horizontally and then is curved downward, i.e., the end portion of the lower hook 182 extends downward. The end of the lower hook 182 is spaced apart from the upper surface of the lower bracket 46. The lower hook 182 has a width along the circumferential direction centered on the axis A.

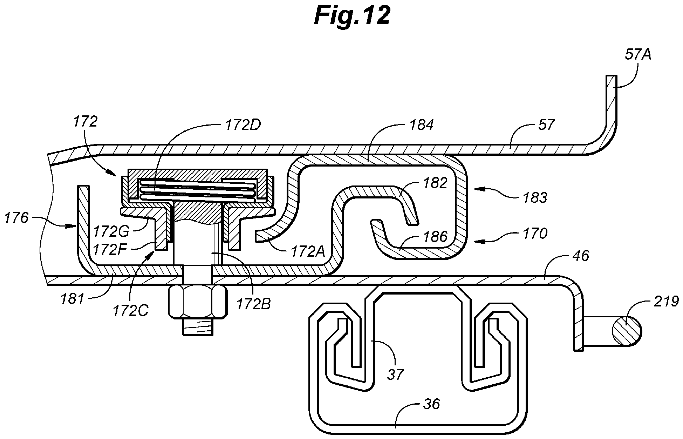

As shown in Figures 4 and 12, each unit 175 has an upper unit 183 provided on the underside of the rotating component 42. The upper unit 183 has an upper plate 184 coupled to the underside of the upper bracket 57. An upper hook 186 projecting downward is provided on the radially outer edge of the upper plate 184, the outer edge extending along a circular line centered on the axis A. A lower portion of the upper hook 186 extends horizontally and then is curved downward, i.e., the end portion of the upper hook 186 extends upward. The end of the upper hook 186 is spaced apart from the lower surface of the upper bracket 57. The upper hook 186 has a width along the circumferential direction centered on the axis A.

As shown in Figures 4, 12, and 13, when the rotating component 42 is at its initial position relative to the base component 41, the upper hook 186 faces the corresponding lower hook 182 with a gap in the vertical direction. The corresponding lower hook 182 and upper hook 186 constitute one separation suppressing component 170. The separation suppressing component 170 is provided between the outer periphery of the base component 41 and the outer periphery of the rotating component 42, which suppresses upward movement of the outer periphery of the rotating component 42 relative to the outer periphery of the base component 41. Even when a vehicle collision or similar event occurs and significant forces (loads) are applied to the seat body 3, the separation suppressing component 170 suppresses the tilt of the rotating component 42 relative to the base component 41.

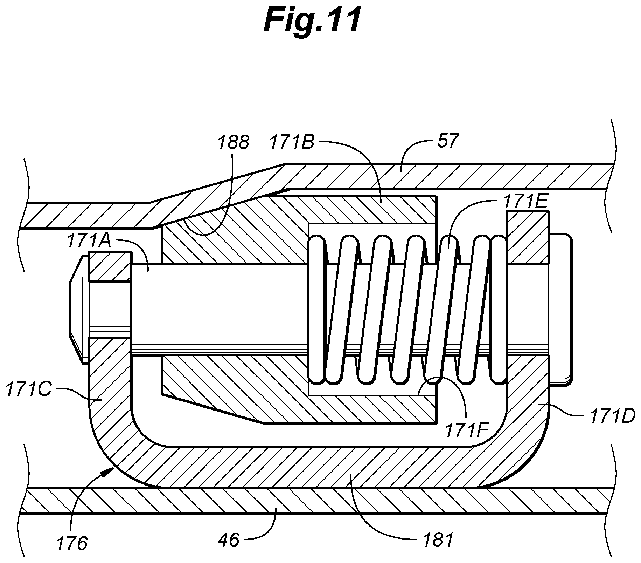

As shown in Figure 11, each of the spacer components 171 is provided on the base component 41 and includes a support shaft 171A extending radially with respect to the axis A and a roller 171B rotatably supported on the support shaft 171A. Each spacer component 171 inhibits the rotating component 42 from coming close to the base component 41. The support bracket 176 has an inner wall 171C and an outer wall 171D, which, respectively, support an inner end and an outer end of the corresponding support shafts 171A, the inner and outer ends being positioned radially inward toward and outward from the axis A, respectively. This configuration enables stable support of the support shafts 171A. The inner wall 171C and outer wall 171D of each unit may be integrally formed with the bottom plate 181. For example, the inner wall 171C may be formed by the upward-folding of the radially inner edge of the bottom plate 181. The outer wall 171D may be formed by the cutting and upward-folding of parts of the bottom plate 181.

Each roller 171B has an outer peripheral surface formed as a tapered surface whose diameter increases radially outward from the axis A. A biasing member 171E is provided on each support shaft 171A to urge the corresponding roller 171B radially inward toward the axis A. The biasing member 171E is a coil spring positioned on the outer circumference of the corresponding support shaft 171A. This enables the biasing member 171E to be attached to the roller 171B with a simple configuration. Each biasing member 171E is a compression coil spring positioned between the outer wall 171D and the corresponding roller 171B. Each roller 171B has a recess 171F at its radially outer end, which is recessed inward toward the axis A. An end portion of the biasing member 171E is received within the corresponding recess 171F. This prevents positional deviation of the biasing member 171E relative to the roller 171B. Each spacer component 171 contacts the rotating component 42 at the corresponding roller 171B, which reduces frictional resistance between the spacer component 171 and the rotating component 42 as the rotating component 42 rotates.

The rotating component 42 has an inclined surface 188 which is inclined upward radially outward from the axis A. The inclined surface 188 extends annularly around the axis A. The inclined surface 188 is formed on the upper bracket 57. The inclined surface 188 may be provided along the outer periphery of the recess 101. Each roller 171B contacts the inclined surface 188. The plurality of rollers 171B can support both the vertical forces (loads) applied from the rotating component 42 and the radial forces (loads) applied in radial directions extending from the axis A. Thus, the plurality of rollers 171B can reduce horizontal positional deviation of the rotating component 42 relative to a fixed part. Each biasing member 171E urges the corresponding rollers 171B radially inward toward the axis A, which can bring the rollers 171B into proper contact with the inclined surface 188.

An upper end of the inner wall 171C is positioned below the upper edge of the radially inner end of the corresponding rollers 171B. An upper end of the outer wall 171D is positioned below the upper edge of the radially outer end of the corresponding rollers 171B. This prevents the inner wall 171C and the outer wall 171D from contacting the rotating component 42.

As shown in Figure 12, each biasing component 172 includes a locking piece 172A protruding downward from the rotating component 42, a support pillar 172B protruding upward from the base component 41, a contact piece 172C supported on the support pillar 172B so that the contact piece can vertically move and contact the locking piece 172A from above, and a biasing member 172D provided between the support pillar 172B and the contact piece 172C to urge the contact piece downward. The biasing component 172 urges the rotating component 42 toward the base component 41. The support pillar 172B extends upward from the bottom plate 181. The support pillar 172B urges the contact piece downward. The biasing component 172 urges the rotating component 42 toward the base component 41. The support pillar 172B extends upward from the bottom plate 181. The support pillar 172B may be formed as a cylindrical member. A stopper 172E is provided at the upper end of the support pillar 172B. The contact piece 172C includes a cylindrical tubular portion 172F and a disc-shaped flange portion 172G projecting radially outward from the upper end of the tubular portion 172F. The tubular portion 172F is positioned on the outer periphery of the support pillar 172B. The tubular portion 172F is supported so that the tubular portion 172F can move vertically relative to the support pillar 172B and also can rotate about the support pillar 172B.

The biasing member 172D is a compression coil spring. The biasing member 172D is positioned around the outer circumference of the support pillar 172B, between the stopper 172E and the flange portion 172G.

The locking piece 172A extends downward from an upper plate 184, then bends toward the axis A, extending radially inward. The locking piece 172A may be formed by the inward-bending of the upper plate 184. The lower end of the locking piece 172A is positioned below the flange portion 172G.

The contact piece 172C, urged downward by the biasing member 172D, contacts the lower end of the locking piece 172A from above at the flange portion 172G. As a result, the biasing component 172 urges the outer periphery of the rotating component 42 downward. The biasing component 172 enables the rotating component 42 to properly contact the plurality of rollers 171B.

As shown in Figure 10, the four units 175 include the plurality of spacer components 171 and plurality of biasing components 172, which are arranged on an imaginary circle C centered on the axis A. The plurality of spacer components 171 and plurality of biasing components 172 are disposed between the outer periphery of the base component 41 and the outer periphery of the rotating component 42, which retains a distance between the base component 41 and the rotating component 42. This suppresses the tilt of the rotating component 42 in the vehicle seat 1 with the swivel mechanism 2. Moreover, in this configuration, the plurality of spacer components 171 and the plurality of biasing components 172 are arranged on the imaginary circle C, which enables well-balanced support of the rotating component 42 relative to the base component 41, and also enables compact arrangement of the plurality of spacer components 171 and the plurality of biasing components 172.

The lower hook 182 is positioned outside the imaginary circle C. Preferably, either the spacer components 171 or the biasing component 172 is positioned on a radial line extending from the axis A to the lower hook 182. This enables compact arrangement of the spacer components 171, the biasing component 172, and the separation suppressing component 170. Preferably, at least one of the plurality of spacer components 171 and the corresponding lower hook 182 is positioned on a radial line centered on the axis A.

The support bracket 176 enables the spacer components 171, the biasing component 172, and the separation suppressing component 170 to be assembled into a single unit, facilitating work of assembly of these components.

Each of the support brackets is provided with a single biasing component positioned between two of the spacer components. In this configuration, the rotating component 42 is urged downward by the biasing component 172 to contact the two rollers 171B, which suppresses the tilt of the rotating component 42.

As shown in Figures 4 and 10, the plurality of spacer components 171 are positioned radially outward from the bearing 63 with regard to the axis A. The plurality of rollers 171B are preferably provided radially outward from the bearing 63 with regard to the axis A. In this configuration, the spacer components 171 are arranged radially outward of the bearing 63, which retains a distance between the outer periphery of the base component 41 and the outer periphery of the rotating component 42, thereby suppressing the tilt of the rotating component 42 in the vehicle seat 1 with the swivel mechanism 2. Moreover, in this configuration, the plurality of spacer components 171 reduce forces (loads) that can be applied to the bearing 63, which prevents formation of an imprint of the bearing 63 on the rotating component 42 and base component 41.

Each separation suppressing component 170 is positioned radially outward of the corresponding spacer components 171 with respect to the axis A. Each separation suppressing component 170 is positioned radially outward of the corresponding rollers 171B with respect to the axis A. In this configuration, even when a vehicle collision or similar event occurs and significant forces (loads) are applied to the seat body 3, the tilt of the rotating component 42 relative to the base component 41 is suppressed.

Preferably, each biasing component 172 is positioned radially inward of the corresponding separation suppressing component 170 with respect to the axis A. This configuration enables compact arrangement of the biasing components 172.

A rotational position of the rotating component 42 when the seat cushion 7 faces frontward in the vehicle is defined as a reference rotational position. When the rotating component 42 is at the reference rotational position, the lower hook 182 and upper hook 186 of the separation suppressing component 170 of each unit 175 face each other with a vertical gap therebetween. Furthermore, the biasing component 172 and the locking piece 172A of each unit 175 come into contact with each other. Even when the rotating component 42 rotates 90 degrees to the right (+90 degrees), 90 degrees to the left (-90 degrees), and 180 degrees to the left (-180 degrees), the lower hook 182 and upper hook 186 of each unit remain spaced apart from and facing each other, and the biasing component 172 and locking piece 172A remain in contact with each other. The plurality of rollers 171B always contact the inclined surface 188 of the upper bracket 57, regardless of the rotational position of the rotating component 42.

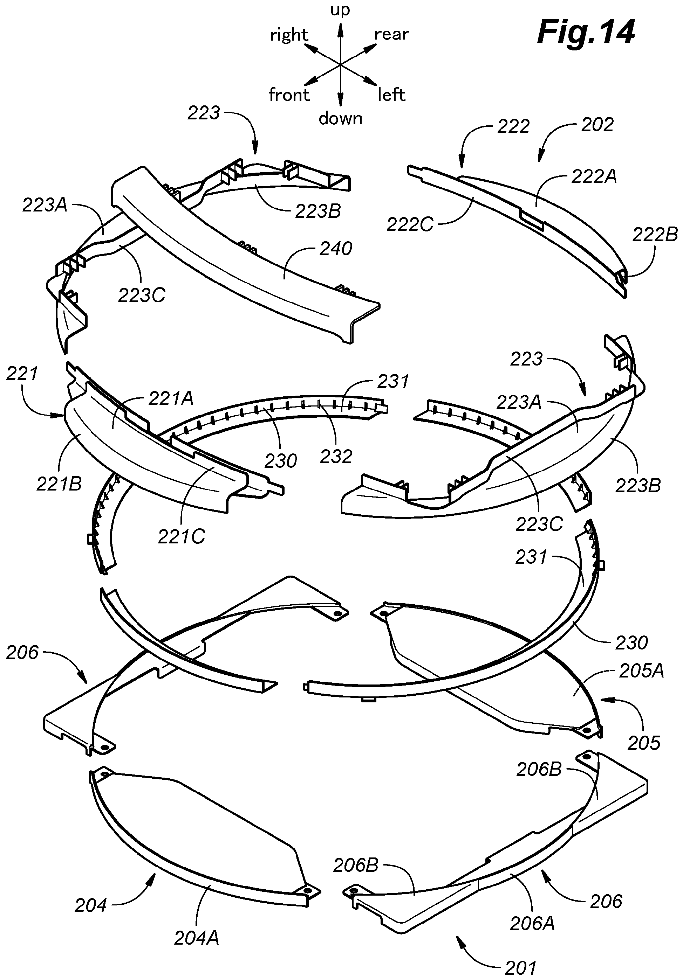

As shown in Figures 3 and 14, the swivel mechanism 2 is provided with a swivel mechanism cover 200. The swivel mechanism cover 200 includes a lower cover 201 provided on the base component 41 and an upper cover 202 provided on the rotating component 42.

The lower cover 201 has a lower cover front part 204 positioned frontward of the base plate 47, a lower cover rear part 205 positioned rearward of the base plate 47, and left and right lower cover side parts 206 positioned on the left and right sides of the base plate 47.

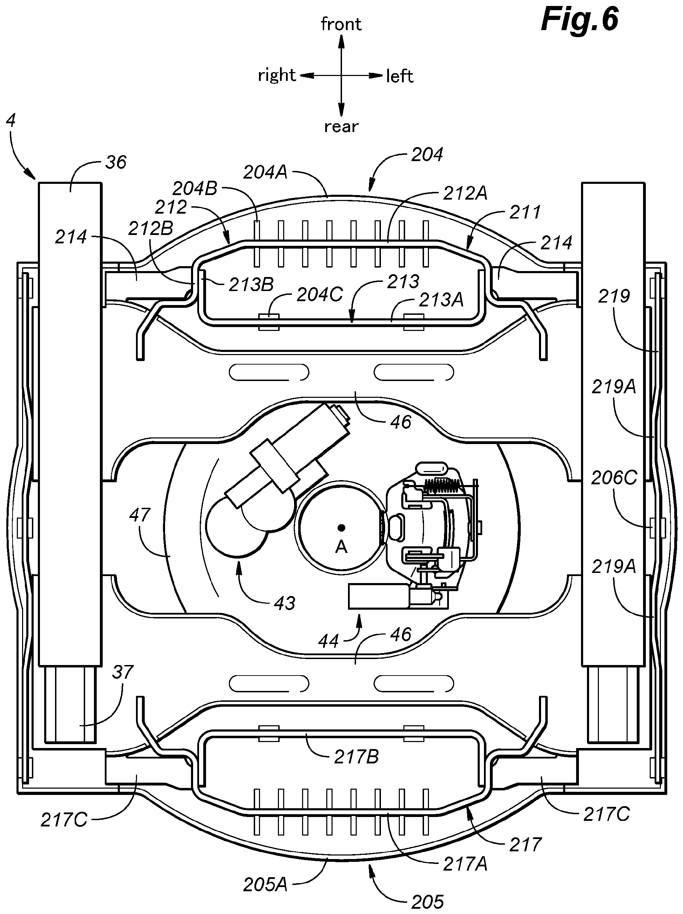

As shown in Figures 4 and 6, the front lower bracket 46 is provided with a front lower cover attachment 211. The front lower cover attachment 211 extends laterally, and is positioned frontward of the front lower bracket 46 and connected to the front lower bracket 46 at its left and right ends. The front lower cover attachment 211includes a first wire 212, a second wire 213, and left and right extension parts 214. The first wire 212 includes a first support member 212A extending in the left-right direction, and left and right first side connecting parts 212B extending rearward from the left and right ends of the first support member 212A. The left and right first side connecting parts 212B are connected to the lower surface of the front lower bracket 46. The first support member 212A is positioned frontward of the front lower bracket 46.

The second wire 213 includes a second support member 213A extending in the left-right direction, and left and right second side connecting parts 213B extending frontward from the left and right ends of the second support member 213A. The left second side connecting part 213B is connected to the left first side connecting part 212B, and the right second side connecting part 213B is connected to the right first side connecting part 212B. The second support member 213A is positioned between the first support member 212A and the front edge of the front lower bracket 46. The first support member 212A and the second support member 213A are spaced apart in the front-rear direction and extend parallel to each other in the left-right direction.

The left and right extension parts 214 are connected to the corresponding left and right first side connecting parts 212B. The left and right extension parts 214 extend laterally outward from the corresponding left and right first side connecting parts 212B. The left and right outer ends of the left and right extension parts 214 may be connected to the front edge of the front lower bracket 46.

The rear lower bracket 46 is provided with a rear lower cover attachment 217. The rear lower cover attachment 217 and the front lower cover attachment 211 are formed in a mutually symmetrical configuration in the front-rear direction. The rear lower cover attachment 217, like the front lower cover attachment 211, has a first wire 217A, a second wire 217B, and left and right extension parts 217C.

The left and right ends of the front lower bracket 46 and the left and right ends of the rear lower bracket 46 are provided with left and right side lower cover attachments 219. The left and right side lower cover attachments 219 are formed in a mutually symmetrical configuration in the left-right direction. Each of the side lower cover attachments 219 is formed of a wire member. The side lower cover attachments 219 extend in the front-rear direction. Each of the side lower cover attachments 219 has a plurality of protrusions 219A which project inward laterally and are connected to the front lower bracket 46 and the rear lower bracket 46. Each of the left and right side lower cover attachments 219 has a front end, rear end, and middle part which are spaced laterally outward from the corresponding side edges of the front and rear lower brackets 46.

As shown in Figures 3 and 14, the lower cover front part 204 is placed on the front lower cover attachment 211. The lower cover front part 204 is formed as a plate-like member with its surfaces facing up and down. The lower cover front part 204 extends in the left-right direction. The lower cover front part 204 includes front lower cover arc part 204A which extends in an arc shape with curvature centered on the axis A and also extends upward. The front lower cover arc part 204A form the front edge of the lower cover front part 204. The front lower cover arc part 204A extends from the left end to the right end of the lower cover front part 204.

As shown in Figure 6, a plurality of reinforcing ribs 204B projecting downward are formed on the lower surface of the lower cover front part 204. The first support member 212A and the second support member 213A contact the lower surface of the lower cover front part 204 via the plurality of reinforcing ribs 204B. In other embodiments, the first support member 212A and the second support member 213A may directly contact the lower surface of the lower cover front part 204. The lower cover front part 204 is supported by the first support member 212A and the second support member 213A, which suppresses rotation of the lower cover front part 204.

The left and right ends of the lower cover front part 204 are fastened to the corresponding left and right extension parts 214 using fastener members such as screws. Thus, the lower cover front part 204 is attached to the front lower cover attachment 211 at a plurality of positions. A plurality of front engagement claws 204C are provided on the underside of the lower cover front part 204 to engage the second support member 213A. This feature enhances the stability of the lower cover front part 204 relative to the front lower cover attachment 211. In this manner, the lower cover front part 204 is positioned frontward of the lower bracket 46.

The lower cover rear part 205 and the lower cover front part 204 are formed in a mutually symmetrical configuration in the front-rear direction. The lower cover rear part 205 has a rear lower cover arc part 205A. A structure where the lower cover rear part 205 is attached to the rear lower cover attachment 217 is similar to the structure where the lower cover front part 204 is attached to the front lower cover attachment 211.

As shown in Figures 3 and 14, the left and right lower cover side parts 206 are formed in a mutually symmetrical configuration in the left-right direction. Each lower cover side part 206 is formed as a plate-like member with its surfaces facing upward and downward. Each lower cover side part 206 extends in the front-rear direction. Each of the lower cover side parts 206 includes a corresponding side lower cover arc part 206A which extends in an arc shape with curvature centered on the axis A, and also extends upward. Each of the left and right side lower cover arc parts 206A extends from the front end to the rear end of the corresponding lower cover side part 206.

The front and rear ends of each lower cover side part 206 include flat plate parts 206B having their surfaces which face upward and downward. The front and rear flat plate parts 206B are positioned radially outward from the corresponding side lower cover arc part 206A, with respect to the axis A.

The lower cover side parts 206 are positioned above the side edges of the front and rear lower brackets 46, the left and right upper rails 37, and the side lower cover attachments 219. The front ends of the lower cover side parts 206 are connected to the corresponding front extension parts 214 using fasteners such as screws, and the rear ends of the lower cover side parts 206 are connected to the corresponding rear extension parts 214 using fasteners such as screws.

A plurality of engagement claws 206C are formed on each of the lower surfaces of the lower cover side parts 206 to engage the corresponding side lower cover attachment 219. The left and right lower cover side parts 206 overlap with the corresponding left and right lower rails 36 as viewed from above. Each lower cover side part 206 covers a part of the corresponding lower rail 36. The left and right upper rails 37 are positioned below the left and right lower cover side parts 206.

The lower cover front part 204 and the lower cover rear part 205 are connected to the left and right lower cover side parts 206. The front ends of the lower cover side parts 206 and the side ends of the lower cover front part 204 are preferably co-fastened to the corresponding front extension parts 214. The rear ends of the lower cover side parts 206 and the side ends of the lower cover rear part 205 are preferably co-fastened to the corresponding rear extension parts 214. Thus, the lower cover front part 204, the lower cover rear part 205, and the left and right lower cover side parts 206 are arranged in an annular manner, centered on the axis A. The front lower cover arc part 204A, rear lower cover arc part 205A, and left and right side lower cover arc parts 206A cooperatively to form a cylindrical surface, centered on the axis A.

The lower cover front part 204, the lower cover rear part 205, and the left and right lower cover side parts 206 in combination enable the lower cover 201 to be positioned around the base plate 47 after the swivel mechanism 2 is formed.

As shown in Figures 3 and 14, the upper cover 202 includes an upper cover front part 221 positioned frontward of the upper bracket 57, an upper cover rear part 222 positioned rearward of the upper bracket 57, and left and right upper cover side parts 223 positioned on the left and right sides of the upper bracket 57.

As shown in Figure 5, an upwardly extending edge wall 57A is provided on the edge of the upper bracket 57. The edge wall 57A extends along an outer periphery of the upper bracket 57. Upper cover attachments 225 for the front side, rear side, left side, and right side are connected to the edge wall 57A. The front upper cover attachment 225 is connected to the front edge of the upper bracket 57. The rear upper cover attachment 225 is connected to the rear edge of the upper bracket 57. The left upper cover attachment 225 is connected to the left edge of the upper bracket 57. The right upper cover attachment 225 is connected to the right edge of the upper bracket 57. Each upper cover attachment 225 includes a vertical wall portion 225A which extends vertically and a lateral wall portion 225B extending radially outward from the lower end of the vertical wall portion 225A, with respect to the axis A. The vertical wall portion 225A and the lateral wall portion 225B of each upper cover attachment extend along the edge wall 57A.

As shown in Figures 3 and 14, the front part 221 of the upper cover has a front upper cover upper wall 221A extending in the lateral (horizontal) direction. The front upper cover upper wall 221A is formed as a plate with its surfaces that face upward and downward. The front upper cover upper wall 221A extends in the left-right direction. A leading edge of the front upper cover upper wall 221A is formed in an arc shape with curvature centered on the axis A. A front upper cover arc part 221B is provided on the front edge of front upper cover upper wall 221A, extending in an arc shape with curvature centered on the axis A and extending downward. A rear edge of the front upper cover upper wall 221A extends in the left-right direction. A front upper cover extension wall 221C, extending upward, is provided on the rear edge of the front upper cover upper wall 221A. The front upper cover extension wall 221C is fastened to the vertical wall portion 225A of the front upper cover attachment 225 using fastener members such as screws. The front upper cover upper wall 221A is supported on the upper surface of the lateral wall portion 225B of the front upper cover attachment 225.

The upper cover rear part 222 and the upper cover front part 221 are formed in a mutually symmetrical shape in the front-rear direction. The upper cover rear part 222 includes a rear upper cover upper wall 222A, a rear upper cover arc part 222B, and a rear upper cover extension wall 222C. The rear upper cover extension wall 222C is fastened to the vertical wall portion 225A of the rear upper cover attachment 225 by fastener members such as screws. The rear upper cover upper wall 222A is supported on the upper surface of the lateral wall portion 225B of the rear upper cover attachment 225.

Each of the left and right upper cover side parts 223 has a side upper cover upper wall 223A extending in the lateral (horizontal) direction. The side upper cover upper wall 223A is formed as a plate-like member with its surfaces that face upward and downward. The side upper cover upper wall 223A extends in the front-rear direction. Each of the left and right outer edges of the side upper cover upper walls 223A is formed in an arc shape with curvature centered on the axis A. Left and right side upper cover arc parts 223B are provided on the left and right outer edges of the corresponding side upper cover upper walls 223A, extending in an arc shape with curvature centered on the axis A and also extending downward. Each of the left and right inner edges of the side upper cover upper walls 223A extends in the left-right direction. Side upper cover extension walls 223C, extending upward, are provided on the left and right inner edges of the corresponding side upper cover upper walls 223A. Each of the side upper cover extension walls 223C of the left and right upper cover side parts 223 is fastened to the vertical wall portion 225A of the corresponding upper cover attachment 225 using fastener members such as screws. Each of the side upper cover upper walls 223A of the left and right upper cover side parts 223 is supported on the upper surface of the lateral wall portion 225B of the corresponding upper cover attachment 225.

The upper cover front part 221 and the upper cover rear part 222 are each connected to the left and right upper cover side parts 223. The front ends of the left and right upper cover side parts 223 are connected to the left and right ends of the upper cover front part 221. The rear ends of the left and right upper cover side parts 223 are connected to the left and right ends of the upper cover rear part 222. Thus, the upper cover front part 221, upper cover rear part 222, and left and right upper cover side parts 223 are arranged in an annular manner, centered on the axis A. The front upper cover arc part 221B, rear upper cover arc parts 222B, and left and right side upper cover arc parts 223B cooperatively to form a cylindrical surface, centered on the axis A.

The front lower cover arc part 204A, rear lower cover arc parts 205A, and left/right side lower cover arc parts 206A, as well as the front upper cover arc part 221B, rear upper cover arc part 222B, and left/right side upper cover arc parts 223B have their shapes of arc of a circle having the same diameter. The outer peripheral edges of the upper cover 202 and lower cover 201 form the circle. This ensures that the outer shapes of the upper cover 202 and lower cover 201 remain circular even when the swivel mechanism 2 rotates.

The lower edge of the upper cover 202 is formed in a circle centered on the axis A. The upper edge of the lower cover 201 is formed in a circle centered on the axis A and is positioned inside the lower edge of the upper cover 202. This allows the outer peripheral edges of the upper cover 202 and the lower cover 201 to be formed as circles.

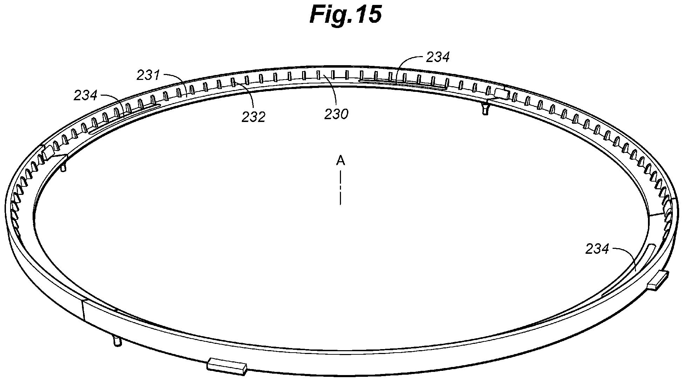

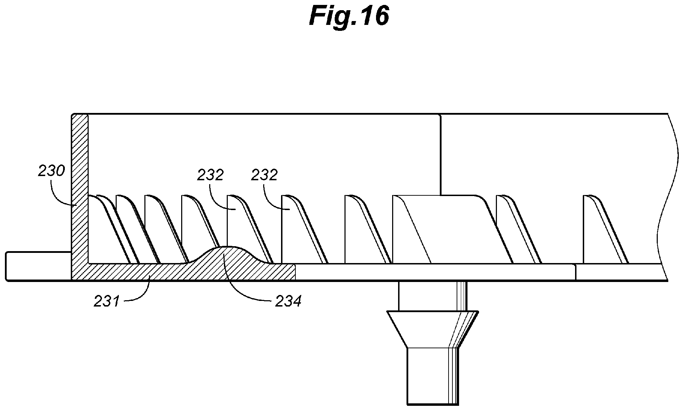

As shown in Figures 13, 15, 16, and 17, a partition wall 230 is provided the inner side of one of the lower cover 201 and upper cover 202. The partition wall 230 overlaps each of the lower cover arc parts 204A, 205A, 206A and the upper cover arc parts 221B, 222B, 223B as viewed along horizontal directions. The partition wall 230 eliminates a gap between the upper cover 202 and the lower cover 201. In the present embodiment, the lower cover 201 is provided with the partition wall 230. The partition wall 230 is part of the lower cover 201 and forms an upper end portion of the lower cover 201. Thus, the upper end portion of the lower cover 201 overlaps a lower end portion of the upper cover 202 as viewed radially from the axis A.

The partition wall 230 is formed in a cylindrical shape centered on the axis A, and the outer diameter of the partition wall 230 is smaller than the outer diameter of the circle of the shapes of arc which the lower cover arc parts have. As a result, the partition wall 230 is positioned inside each of the lower cover arc parts 204A, 205A, and 206A. The partition wall 230 is hidden inside by the upper cover 202 and lower cover 201. The partition wall 230 is positioned to extend along the inner surfaces of the lower cover arc parts 204A, 205A, and 206A, which prevents positional deviation of the partition wall 230.

The plurality of separation suppressing components 170 are arranged radially inward of the partition wall 230. Thus, the separation suppressing components 170 are hidden inside by the upper cover 202 and lower cover 201. The plurality of units 175 are positioned radially inward of the partition wall 230. The plurality of spacer components 171 are positioned radially inward of the lower cover 201 toward the axis A.

A ring-shaped flange 231 extending radially inward is provided at the lower end of partition wall 230. A plurality of reinforcing ribs 232 extend from the partition wall 230 to the flange 231 at the boundary between the partition wall 230 and the flange 231. Each reinforcing rib 232 is formed in a plate-like shape and extends radially inward toward the central axis A.

A plurality of protrusions 234 capable of engaging with the plurality of upper hooks 186 are provided on the upper surface of the flange 231. When the rotating component 42 is at the reference rotational position, each protrusion 234 engages the lower end of the corresponding upper hook 186 from below. This suppresses vertical displacement of the rotating component 42 relative to the base component 41.

The flange 231 is positioned radially outward of the bearing 63. As a result, the protrusions 234 of the flange 231 and the upper hooks 186 come into contact with each other at radial positions outward of the bearing 63. This suppresses vertical displacement of the rotating component 42 relative to the base component 41 at the radial positions outward of the bearing 63.

The rotating plate 56 is provided at a vertical position between the upper end and lower end of each support bracket 176. This configuration allows the rotating plate 56 to be positioned closer to the base plate 47, enabling the swivel mechanism 2 to be made compact. Each support bracket 176 overlaps with one of the left and right lower rails 36 as viewed from above. In some cases, the rotating plate 56 may be partially positioned below the upper end of the left and right lower rails 36. These features enable the slide mechanisms 4 and the swivel mechanism 2 to be made compact.

Each spacer component 171 may be partially positioned between the upper end of the corresponding lower hook 182 and the lower end of the corresponding upper hook 186. This configuration enables well-balanced arrangement of the spacer components 171 and the separation suppressing component 170.

The partition wall 230 and the flange 231 may be formed by the combining of multiple pieces divided in the circumferential direction. This enables the partition wall 230 and flange 231 to be attached to the swivel mechanism 2 after the swivel mechanism 2 is assembled.

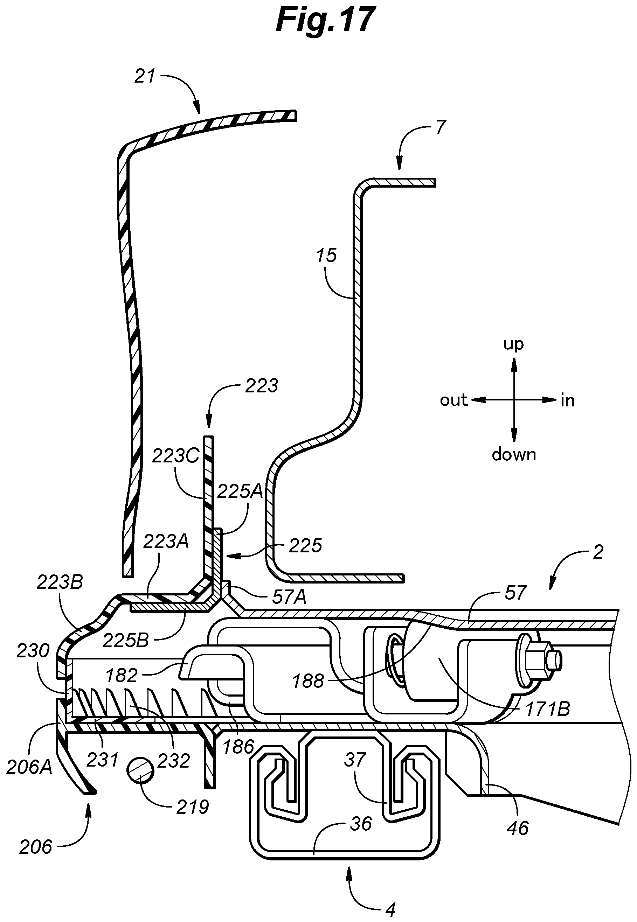

As shown in Figure 17, when the seat cushion 7 is at the high position and low position, the upper cover 202 of the swivel mechanism cover 200 overlaps the side covers 21 as viewed along the left-right direction. Specifically, when the seat cushion 7 is at the high position and low position, the upper end of the upper cover 202 is positioned above the lower end of the side covers 21. More specifically, when the seat cushion 7 is at the high position and low position, the upper end of the side upper cover extension wall 223C of each of the left and right upper cover side parts 223 is positioned above the lower end of the corresponding side cover 21. Furthermore, each side cover 21 overlaps the side upper cover upper wall 223A of the corresponding one of the left and right upper cover side parts 223, as viewed from above. With these features, even when the seat cushion 7 is raised by the lifting mechanism 110, the swivel mechanism cover 200 overlaps the side covers 21 as viewed along the left-right direction. As a result, no gap is formed between the seat cushion 7 and the swivel mechanism cover 200. This configuration prevents foreign matters from entering the vehicle seat 1 with the swivel mechanism 2 and the lifting mechanism 110.

The left and right upper cover attachments 225 are positioned inward of the left and right side covers 21 with regard to the axis A of the swivel mechanism 2. With this arrangement, the left and right upper cover attachments 225 are hidden by the left and right side covers 21.

A front cover 240 is provided between a front portion of the seat cushion 7 and the upper cover 202. The left and right upper cover attachments 225 are positioned rearward of the front cover 240. With this arrangement, the upper cover attachments 225 are hidden behind by the front cover 240. The front cover 240 may be coupled to the seat cushion 7 or the upper bracket 57. The front cover 240 extends in the left-right direction and has a length in the vertical direction.

The upper cover attachments 225 are positioned radially outward of the separation suppressing components 170 with respect to the axis A. With this configuration, the upper cover 202 can be fixed at the outer periphery of the rotating component 42.

The lower ends of the side covers 21 overlap the upper cover side parts 223 as viewed along the vertical direction. When the seat cushion 7 is at the high position and low position, the lower end of each side cover 21 is positioned below the upper end of the corresponding upper cover side part 223. Specifically, the lower end of each side cover 21 overlaps the corresponding side upper cover upper wall 223A as viewed along the vertical direction. When the seat cushion 7 is at the high position and low position, the lower end of each side cover 21 is positioned below the upper end of the corresponding upper cover extension wall 223C.

The present invention has been described in terms of specific embodiments, but is not limited by such embodiments, and can be embodied with various modifications. For example, the bearing 63 is not limited to a ball bearing; any one of various known bearings can be used. For example, the bearing 63 may be a roller bearing.

The relative position of the side covers 21 with respect to the swivel mechanism 2 and the slide mechanisms 4 may be modified as appropriate. For example, the outer end of each of the left and right side covers 21 may be positioned inward of the outer end of a corresponding one of the left and right lower rails 36, as viewed from above. Furthermore, the outer ends of the left and right side covers 21 may be positioned inward of the left and right outer ends of the upper cover 202, as viewed from above. In this case, the upper end of the upper cover 202 may be positioned to cover the lower ends of the side covers 21. The left and right outer ends of the upper cover 202 and those of the lower cover 201 may be positioned inward relative to the corresponding outer ends of the left and right lower rails 36.

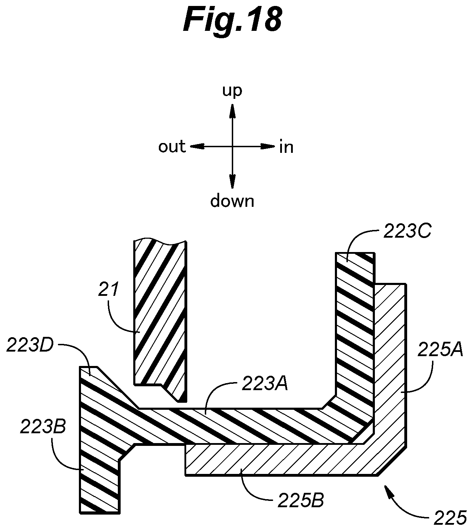

As shown in Figure 18, the lower end of each side cover 21 may be positioned laterally inward of the side upper cover arc part 223B of the corresponding upper cover side part 223. Furthermore, the lower end of each side cover 21 may be positioned to face the corresponding side upper cover upper wall 223A in the vertical direction. In this case, the upper end of each of the side upper cover arc parts 223 may be provided with a side upper cover outer wall 223D protruding therefrom. The upper end of the side upper cover outer wall 223D may be positioned above the lower end of the corresponding side cover 21. The side upper cover outer wall 223D fills a gap between the corresponding side cover 21 and upper cover side part 223, as viewed along lateral direction.

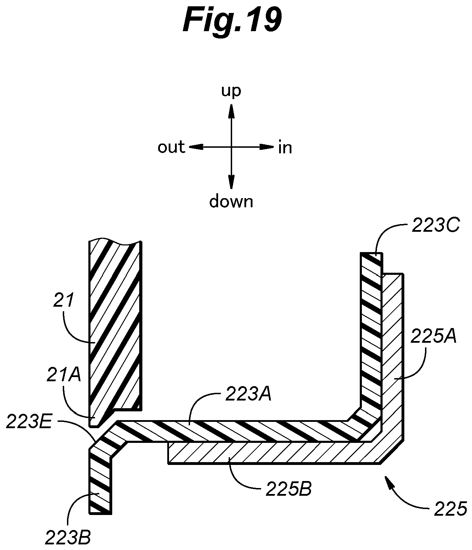

As shown in Figure 19, the lower end of each side cover 21 may be positioned above the side upper cover arc part 223B of the corresponding upper cover side part 223. In this case, a recess 223E, which is recessed downward, may be formed at the upper end of the side upper cover arc part 223B. Furthermore, the lower end of each side cover 21 may be provided with an extension wall 21A extending downward. The lower end of the extension wall 21A may protrude into the recess 223E and be positioned below the corresponding side upper cover upper wall 223A. The extension wall 21A of each side cover 21 fills a gap between the side cover 21 and the corresponding upper cover side part 223, as viewed along the left-right direction.

In some embodiments, a vehicle with the vehicle seat may have a recess formed on a center console or door trim of the vehicle on its side facing the vehicle seat, where the recess is formed in order to avoid coming in contact with laterally outer ends of the upper cover 202 and the lower cover 201. In this case, the laterally outer ends of the upper cover 202 and the lower cover 201 may partially protrude into the recess. The recesses may extend in the front-rear direction.

The partition wall 230 may be divided into a plurality of parts and arranged discontinuously along a circular path centered on the axis A. In other words, the shape of the partition wall 230 is not limited to an annular shape.

### GLOSSARY

- 1: vehicle seat
- 2: swivel mechanism
- 3: seat body
- 7: seat cushion
- 21: side cover
- 41: base component
- 42: rotating component
- 46: lower bracket
- 47: base plate
- 63: bearing
- 110: lifting mechanism
- 170: separation suppressing component
- 171: spacer component
- 175: unit
- 176: support bracket
- 182: lower hook
- 183: upper unit
- 186: upper hook
- 188: inclined surface
- 200: swivel mechanism cover
- 201: lower cover
- 202: upper cover
- 204: lower cover front part
- 204A:: front lower cover arc part
- 205: lower cover rear part
- 206: lower cover side part
- 211: front lower cover attachment
- 217: rear lower cover attachment
- 219: side lower cover attachment
- 221: upper cover front part
- 222: upper cover rear part
- 223: upper cover side part
- 225: upper cover Attachments
- 230: partition wall
- 231: flange
- 240: front cover
- A: axis
- C: imaginary circle

## Claims

1. A vehicle seat comprising:
a seat body having a seat cushion; and
a swivel mechanism disposed between a floor and the seat cushion, rotatably supporting the seat cushion so that the seat cushion is rotatable about a rotation axis extending in a vertical direction,
wherein the swivel mechanism comprises a base component, and a rotating component rotatably supported by the base component and rotatable about the rotation axis,
wherein the swivel mechanism comprises a plurality of spacer components and a plurality of biasing components disposed between an outer periphery of the base component and an outer periphery of the rotating component, such that the spacer components inhibit the rotating component from coming close to the base component, and that the biasing components urge the rotating component toward the base component, and
wherein the plurality of spacer components and the plurality of biasing components are arranged on an imaginary circle centered on the rotation axis.

2. The vehicle seat as claimed in claim 1, wherein the base component includes a plurality of support brackets, and
wherein each of the plurality of support brackets includes the one or more spacer components and the one or more biasing components.

3. The vehicle seat as claimed in claim 2, wherein the swivel mechanism includes one or more separation suppressing components provided between the outer periphery of the base component and the outer periphery of the rotating component, and
wherein each separation suppressing component includes a lower hook that protrudes upward from an edge of the support bracket, and an upper hook that protrudes downward from the rotating component and bends to face the lower hook from below through a gap.

4. The vehicle seat as claimed in claim 3, wherein the lower hook is positioned outside the imaginary circle, and
wherein either the spacer components or the biasing components are positioned on a radial line extending from the rotation axis to the lower hook.

5. The vehicle seat as claimed in claim 4, wherein each of the support brackets is provided with one of the biasing components positioned between two of the spacer components.

6. The vehicle seat as claimed in claim 2, wherein the base component is supported on the floor via left and right slide mechanisms,
wherein the base component comprises one or more lower brackets coupled to the left and right slide mechanisms, and a base plate supported by the lower brackets,
wherein the rotating component comprises a rotating plate rotatably supported by the base plate, and an upper bracket coupled to the rotating plate,
wherein the upper bracket is coupled to an upper surface of the rotating plate and also coupled to the seat body,
wherein the plurality of spacer components and the plurality of biasing components are arranged between the lower bracket and the upper bracket, and
wherein the rotating plate is provided at a vertical position between an upper end and a lower end of each support bracket.

7. The vehicle seat as claimed in claim 6, wherein each of the support brackets overlaps with one of the left and right slide mechanisms as viewed from above, and
wherein part of the rotating plate is positioned below upper ends of the left and right slide mechanisms.

8. The vehicle seat as claimed in claim 1, wherein each of the biasing component comprises: a locking piece projecting downward from the rotating component; a support pillar projecting upward from the base component; a contact piece supported on the support pillar so that the contact piece can vertically move and contact the locking piece from above; and a biasing member provided between the support pillar and the contact piece to urge the contact piece downward,

9. The vehicle seat as claimed in claim 2, wherein each spacer component includes a roller rotatably supported by the corresponding support bracket, and can contact the rotating component at the roller.

10. The vehicle seat as claimed in claim 3, wherein part of each of the spacer components is positioned at a vertical position between an upper end of the lower hook and a lower end of the upper hook.

11. The vehicle seat as claimed in claim 1, wherein the seat body comprises a seatback provided at a rear of the seat cushion via a reclining device, and a headrest provided at a top of the seatback, and
wherein the reclining device enables a user to freely adjust an inclination angle of the seatback relative to the seat cushion.
